# EUROPÄISCHE PATENTSCHRIFT

(11) **EP 3 391 729 B1**
(45) Veröffentlichungstag und Bekanntmachung des Hinweises auf die Patenterteilung: **05.08.2020**
(21) Anmeldenummer: 18000355.0
(22) Anmeldetag: 13.04.2018
(51) Int. Cl.: A01F 15/12, A01F 15/14, B65B 13/32, B65H 59/36

(54) **BALLENPRESSE**
BALING PRESS
PRESSE À BALLES

(30) Priorität: 21.04.2017 DE 102017003884
(43) Veröffentlichungstag der Anmeldung: 24.10.2018
(73) Patentinhaber: Maschinenfabrik Bernard Krone GmbH & Co. KG, 48480 Spelle (DE)
(72) Erfinder: Kreyenhagen, Michael, 49163 Bohmte (DE)
(74) Vertreter: Pott, Ulrich

(56) Entgegenhaltungen:
- EP-A1- 0 225 665
- WO-A1-2014/144470
- CH-A- 481 002
- DE-A1- 2 643 386
- DE-B- 1 025 169
- DE-B3-102006 007 202
- DE-U1- 29 905 765
- US-A- 1 351 867

## Beschreibung

Die Erfindung betrifft eine Ballenpresse für landwirtschaftliches Erntegut mit einem Presskanal und mit mindestens einer Bindeeinrichtung für ein bandförmiges Bindematerial aus vorzugsweise einem verschweißbaren oder verklebbaren Kunststoffmaterial zur Umhüllung des zu pressenden Ballens, wobei die Bindeeinrichtung einen das Bindematerial stoffschlüssig verbindenden Stoffschlusserzeuger aufweist.

Derartige Ballenpressen sind beispielsweise aus der WO 93/13988 bekannt. Derartige Ballenpressen können als stationär betriebene Ballenpressen Verwendung finden. In der Landwirtschaft finden sie jedoch häufig als mobile Ballenpressen Verwendung. Bei mobilem Einsatz erfolgt eine kontinuierliche Aufnahme von landwirtschaftlichem Erntegut. Um einen kontinuierlichen Erntegutstrom in einer Ballenpresse verarbeiten zu können, sind kurze Bindezyklen notwendig. Die Umhüllung des zu pressenden Ballens muss geschehen, ohne die Ballenpresse zwischendurch anzuhalten. Bei hochgradig leistungsfähigen landwirtschaftlichen Ballenpressen ergibt sich somit ein vergleichsweise kurzes Zeitfenster für einen Bindezyklus.

Aus der WO 2014/144470 A1 ist eine Ballenpresse der eingangs genannten Art bekannt, die ebenfalls einen Presskanal aufweist und mit mindestens einer Bindeeinrichtung für ein bandförmiges Bindematerial aus einem verschweißbaren Kunststoffmaterial zur Umhüllung des zu pressenden Ballens ausgerüstet ist. Die Bindeeinrichtung weist einen das Bindematerial stoffschlüssig verbindenden Stoffschlusserzeuger 60 und eine Abrolleinrichtung 54 auf.

Aufgabe der vorliegenden Erfindung ist es, eine Ballenpresse der eingangs genannten Art in ihrer Leistungsfähigkeit und Zuverlässigkeit zu verbessern.

Erfindungsgemäß wird diese Aufgabe dadurch gelöst, dass die zumindest eine Bindeeinrichtung eine Abrolleinrichtung und einen Bandspeicher aufweist, der einen Teil des zwischen der Abrolleinrichtung und dem Stoffschlusserzeuger geführten Bindematerials aufnimmt, wobei der Bandspeicher mindestens zwei von dem Bindematerial umschlungene Bandspeicherachskörper aufweist, von denen mindestens einer als Freiachskörper derart beweglich angeordnet ist, dass der Abstand der Bandspeicherachskörper zueinander veränderbar ist, und wobei der Bandspeicher mindestens ein Bandspeicherrückstellelement aufweist, durch das der Freiachskörper mit einer den Freiachskörper in eine den Abstand der Bandspeicherachskörper vergrößernde Richtung bewegenden Kraft beaufschlagbar ist, und wobei die Abrolleinrichtung gegenüber dem Presskanal drehbar gelagert ist und einen aufgerollten Teil des Bindematerials und mindestens eine Bremskontaktfläche aufweist und eine Regeleinrichtung umfasst, wobei die Regeleinrichtung mindestens ein gegenüber dem Presskanal bewegbar gelagertes und durch einen abgerollten Teil des Bindematerials ansteuerbares Regelelement, mindestens ein durch eine Ansteuerung des Regelelementes von der Bremskontaktfläche lösbares Bremselement sowie mindestens ein die Regeleinrichtung in eine eine Rotation der Abrolleinrichtung bremsende Bremsstellung zurückstellendes Bremsrückstellelement aufweist, wobei in der Bremsstellung die Bremskontaktfläche zumindest teilweise am Bremselement anliegt und wobei das Regelelement ein einen abgerollten Teil des Bindematerials zumindest teilweise umschließendes Führungselement umfasst.

Eine Erhöhung der Leistungsfähigkeit kann über eine Verkürzung der für einen Bindezyklus benötigten Zeit erreicht werden. Um die Zeitdauer eines Bindezyklus zu verringern, kann die Geschwindigkeit, mit der das Bindematerial um den Ballen herumgeführt wird, erhöht werden. Wenn jedoch das Bindematerial, insbesondere bei der Zuführung des Bindematerials durch eine Bindenadel, mit einer hohen Geschwindigkeit um den Ballen herumgeführt werden soll, kommt es zu einer hohen Beschleunigung der Abrolleinrichtung. Das Bindematerial muss aufgrund des rechteckigen Querschnitts abgerollt werden, um Torsion zu vermeiden. Aufgrund des Trägheitsmomentes der Abrolleinrichtung wirken hierbei große Kräfte, die zu einer kurzzeitigen Spitze in der Leistungsaufnahme der Ballenpresse führen. Die Bauteile der Ballenpresse, die der Führung des Bindematerials dienen, werden stark beansprucht, und ggf. kann das Bindematerial reißen, was die Zuverlässigkeit der Ballenpresse einschränkt. Dies wird bei der erfindungsgemäßen Ballenpresse vermieden.

Der Bandspeicher nimmt einen Teil des zwischen der Abrolleinrichtung und dem Stoffschlusserzeuger geführten Bindematerials auf und kann dieses bei vergleichsweise geringen Kräften sehr schnell abgeben, wenn das Bindematerial um den gepressten Ballen herumgeführt werden soll. Dies erfolgt durch eine Veränderung des Abstandes der Bandspeicherachskörper. Da hierbei lediglich der oder die Freiachskörper beschleunigt werden müssen, sind deutlich geringere Massen zu bewegen. Nach der Abgabe des im Bandspeicher gespeicherten Bindematerials wird der Freiachskörper durch das Bandspeicherrückstellelement in eine den Abstand der Bandspeicherachskörper vergrößernden Position bewegt. Dabei füllt sich der Bandspeicher mit neuem Bindematerial, das von der Abrolleinrichtung abgerollt wird. Der Bandspeicher ermöglicht somit ein kontinuierlicheres Abrollen des Bindematerials und vermeidet Belastungs- und Leistungsspitzen.

Bevorzugt sind die Bandspeicherachskörper parallel zueinander ausgerichtet. Das Bindematerial kann hierdurch glatt und ohne Torsion in dem Bandspeicher geführt werden. Dies erhöht die Betriebssicherheit und Zuverlässigkeit der Ballenpresse.

Vorzugsweise sind die Bandspeicherachskörper jeweils alternierend mehrfach nach Art eines Flaschenzuges von dem Bindematerial umschlungen. Durch das mehrfache Umschlingen der Bandspeicherachskörper kann bei einer Änderung des Abstandes der Bandspeicherachskörper zueinander ein Vielfaches der Abstandsdifferenz an Bindematerial freigegeben werden. Hierdurch kann der Bauraum des Bandspeichers in der Ballenpresse verkleinert werden.

Bevorzugt sind die Bandspeicherachskörper in einer Ebene relativ zueinander beweglich. Dies ermöglicht den Aufbau eines Bandspeichers als längserstrecktes Bauteil, das sich harmonisch in eine Ballenpresse, die im Wesentlichen von dem längserstreckten Presskanal bestimmt wird, einfügen lässt. Dies ermöglicht den Bau einer kompakten und kostengünstigen Ballenpresse.

In einer vorteilhaften Ausgestaltung ist ein Bandspeicher einer Bindeeinrichtung zugeordnet. Die einzelnen Bandspeicher weisen dadurch vergleichsweise kleine Abmessungen auf und können entsprechend des zur Verfügung stehenden Bauraumes optimal in der Ballenpresse angeordnet werden.

In einer alternativen vorteilhaften Ausführungsform ist ein Bandspeicher mehreren Bindeeinrichtungen der Ballenpresse zugeordnet. Hierdurch wird die Anzahl notwendiger Bandspeicher reduziert und dadurch der insgesamt notwendige Bauraum sowie das insgesamt notwendige Gewicht des Bandspeichers gegenüber einer Lösung mit einzelnen Bandspeichern für jede Bindeeinrichtung reduziert.

Vorteilhafterweise weist das maximal durch eine Änderung des Abstandes der Bandspeicherachskörper freigebbare Bindematerial eine Länge zwischen 1 m und 4 m auf. Die maximal freigebbare Länge des Bindematerials und damit die Abmessungen des Bandspeichers können somit an die Höhe des Presskanals bzw. die Höhe der zu pressenden Ballen angepasst werden. Der Bandspeicher sollte mindestens Bindematerial der doppelten Ballenhöhe zzgl. einer für den Stoffschlusserzeuger notwendigen Überlappungslänge freigeben können. Eine maximal freigebbare Bindemateriallänge zwischen 1 m und 4 m ist somit für die derzeit gebräuchlichen Ballenhöhen bei Ballenpressen für landwirtschaftliches Erntegut geeignet.

Bevorzugt beträgt die maximal mögliche Abstandsdifferenz der Bandspeicherachskörper zwischen 300 und 600 mm, vorzugsweise zwischen 400 und 500 mm. Das Bindematerial umschlingt die Bandspeicherachskörper zwei bis zwölf Bahnen, vorzugsweise sechs bis acht Bahnen im Bandspeicher ausbildend. Bandspeicher mit maximal möglicher Abstandsdifferenz der Bandspeicherachskörper zwischen 300 und 600 mm, vorzugsweise zwischen 400 und 500 mm, haben Außenabmessungen, die sich besonders einfach in Ballenpressen integrieren lassen. Durch die Mehrfachumschlingung wird auch bei vergleichsweisen kurzen Achskörperabstandsänderungen die nötige Länge des freigebbaren Bindematerials erreicht und die Beschleunigung des Freiachskörpers gering gehalten.

Vorzugsweise ist das Bandspeicherrückstellelement als Zugfeder ausgestaltet. Eine Ausgestaltung als Zugfeder ermöglicht eine einfache und kostengünstige Realisierung des Bandspeicherrückstellelementes. Zudem kann die Zugfeder relativ leicht zugänglich an der Ballenpresse angeordnet werden, so dass diese bei einem möglichen Defekt einfach und zügig gewechselt werden kann. Hierdurch wird die Wartbarkeit und somit die Betriebssicherheit und Zuverlässigkeit erhöht.

Die Abrolleinrichtung ist in Bezug auf den Presskanal drehbar gelagert und weist einen aufgerollten Teil des Bindematerials und zumindest eine Bremskontaktfläche sowie eine Regeleinrichtung auf. Die Regeleinrichtung weist mindestens ein in Bezug auf den Presskanal bewegbar gelagertes und durch einen abgerollten Teil des Bindematerials ansteuerbares Regelelement und mindestens einen durch eine Ansteuerung des Regelelementes von der Bremskontaktfläche lösbares Bremselement auf. Außerdem weist die Regeleinrichtung mindestens ein die Regeleinrichtung in eine Bremsstellung zurückstellendes Bremselementrückstellelement auf, in der die Abrolleinrichtung abgebremst wird, wobei in der Bremsstellung die Bremskontaktfläche zumindest teilweise am Bremselement anliegt. Das Regelelement umfasst ein einen abgerollten Teil des Bindematerials zumindest teilweise umschließendes Führungselement. Hierdurch wird das Bindematerial in bzw. an dem Regelelement geführt.

In der Abrolleinrichtung ist ein Bindematerialvorrat gelagert. Das gerollte Bindematerial weist ein vergleichsweise großes Massenträgheitsmoment auf. Bei der Entnahme des gerollten Bindematerials würde dieses in Rotation versetzt und nach Abschluss der Entnahme weiterdrehen. Hierdurch kann eine minimale Bandspannung in der Bindeeinrichtung unterschritten werden. Ein solches Nachrollen oder Ausrollen verhindert die vorliegende Regeleinrichtung, die eine lösbare Bremse aufweist, wobei die Bremse durch die Bandspannung gelöst bzw. bei abnehmender Bandspannung wieder wirksam wird. Durch das einen abgerollten Teil des Bindematerials zumindest teilweise umschließende Führungselement wird die Zuverlässigkeit des Regelelementes erhöht, da das Risiko eines Abrutschens des Bindematerials von dem Führungselement reduziert wird.

Vorzugsweise umfasst die Abrolleinrichtung Bindematerial in Form einer Bandrolle und einen drehbaren und die Bandrolle tragenden Bandrollenträger. Durch die Trennung zwischen der das Bindematerial enthaltenden Bandrolle und dem Bandrollenträger ist die Ballenpresse einfach mit neuem Bindematerial zu bestücken.

Mit Vorteil ist die Abrolleinrichtung um eine zu einer Längsmittelachse des Presskanals orthogonale und zu einer Bodenebene des Presskanals parallele Abrolldrehachse drehbar. Hierbei beinhaltet die Bodenebene des Presskanals die in der Betriebsposition der Ballenpresse dem Boden nächste Seite des Presskanals. Dies ermöglicht eine einfachere Führung des Bindematerials in der Bindeeinrichtung. Weiterhin kann die Abrolleinrichtung an den Seiten bzw. parallel zu den Seiten der Ballenpresse angeordnet werden. Hier ist die Abrolleinrichtung leicht zugänglich für Bediener der Ballenpresse, so dass eine Bestückung der Abrolleinrichtung mit Bindematerial einfach möglich ist. Die einfache Zugänglichkeit erhöht die Verfügbarkeit und damit die Leistungsfähigkeit der Ballenpresse.

Vorzugsweise ist das Regelelement um eine Regelelementschwenkachse schwenkbar angeordnet, wobei die Regelelementschwenkachse in Bezug auf den Presskanal ortsfest positioniert ist. Durch die schwenkbare Anordnung des Regelelementes kann unter Ausnutzung der Hebelwirkung eine einfache Betätigung der Bremse bzw. des Bremselementes durch das Regelelement erfolgen. Das Regelelement kann dabei durch vergleichsweise geringe Änderungen in der Spannung des Bindematerials bewegt werden.

Vorteilhafterweise ist das Regelelement durch eine erhöhte Bandspannung des Bindematerials derart ansteuerbar, dass das Bremselement dadurch von der Bremskontaktfläche lösbar ist. Somit wird bei Erhöhung der Bandspannung das Bremselement von der Bremskontaktfläche gelöst, so dass das Bindematerial leichter von der Bandrolle abrollen kann und somit die Bandspannung wieder absinkt.

Bevorzugt ist das Führungselement als Öse ausgebildet. In diesem Fall ist das Bindematerial von der Öse vollständig umschlossen, so dass es zuverlässig an seinem Platz relativ zu dem Regelelement gehalten wird und die Abrolleinrichtung ferner seine Aufgabe mit erhöhter Zuverlässigkeit erfüllen kann.

Vorteilhafterweise ist die Bremskontaktfläche durch eine Mantelfläche eines Kreiszylinders gebildet und das Bremselement weist eine zu einem Teil der Bremskontaktfläche komplementäre kreiszylindermantelabschnittsförmige Bremselementfläche auf. Die Bremselementfläche wirkt somit auf eine Bremskontaktfläche die nicht Teil der Bandrolle ist. Dadurch ist die Lage der Bremskontaktfläche zur Bremselementfläche bei einem Wechsel der Bandrolle unverändert. Dies erhöht die Zuverlässigkeit der Abrolleinrichtung. Durch die Ausgestaltung der Bremskontaktfläche als zylindermantelförmige Bremskontaktfläche kann eine Abhebungsbewegung des Bremselementes von der Bremskontaktfläche in einer zur Bewegung des Regelelements parallelen Ebene erfolgen. Hierdurch wird die Übertragung der Bewegung vom Regelelement auf das Bremselement erleichtert.

Bevorzugt ist das Bremsrückstellelement als Feder ausgebildet. Durch die Verwendung einer Feder kann die Kraft, mit der das Bremselement auf die Bremskontaktfläche in einer Bremsstellung einwirkt, einfach an die Einsatzbedingungen der Ballenpresse angepasst werden. Durch die Anpassung der Feder an die vorherrschenden Einsatzbedingungen der Ballenpresse kann die Zuverlässigkeit der Ballenpresse erhöht werden.

In einer bevorzugten Ausführung sind das Regelelement und das Bremsrückstellelement einteilig ausgebildet. Dies vereinfacht den Aufbau von Bremsrückstellelement und Regelelement. Besonders bevorzugt ist in diesem Fall die Regeleinrichtung durch die auf das Regelelement wirkende Gewichtskraft in die Bremsstellung rückstellbar. Hierbei wirkt ein dem Regelelement zugeordnetes Gewicht als Rückstellelement der Regeleinrichtung. Bei einer solchen Gestaltung des Regelelementes kann ein weiteres, beispielsweise als Feder ausgestaltetes, Rückstellelement entfallen. Zumindest jedoch kann ein Rückstellelement beispielsweise in Form eines Federelementes durch die Wirkung der Gewichtskraft des Regelelements bzw. eines an dem Regelelement angeordneten Gewichtes unterstützt werden, so dass das separate Rückstellelement weniger stark beansprucht wird.

Bevorzugt umfasst die Regeleinrichtung eine zwischen dem Regelelement und dem Bremselement angeordnete und eine Übersetzung oder eine Untersetzung erzeugende Übertragungsvorrichtung. Hierdurch ist es möglich, kleine Wege des Regelelements in große Wege des Bremselement oder umgekehrt zu untersetzen. Die Übertragungsvorrichtung mit einer entsprechenden Übersetzung oder Untersetzung kann entsprechend den Anforderungen an die Ballenpresse gewählt werden. Besonders bevorzugt weist die Übertragungsvorrichtung einen längenverstellbaren Steuerhebel auf. Hierdurch kann im Einsatz auf die Sensibilität der Regeleinrichtung Einfluss genommen werden. Dies erleichtert die Anpassung an die gegebenen Bedingungen und führt somit zu einer zuverlässigeren und höher verfügbaren Ballenpresse.

Vorteilhafterweise ist das Regelelement zwischen der Abrolleinrichtung und einem einen abgerollten Teil des Bindematerials umlenkenden Umlenkelement angeordnet. Die Anordnung des Regelelementes zwischen Abrolleinrichtung und Umlenkelement vermindert das Risiko einer Torsion des bandförmigen Bindematerials und eröffnet mehr Möglichkeiten, ein Gewicht am Regelelement als Rückstellelement zu verwenden. Durch die Verwendung des Umlenkelementes können zudem die Abrolleinrichtung und das Regelelement vergleichsweise unabhängig von den Bedingungen und Erfordernissen der restlichen Bindeeinrichtungen in der Ballenpresse angeordnet werden. Insbesondere kann das Regelelement so angeordnet werden, dass die auf das Regelelement wirkende Gewichtskraft in eine für die Funktion der Regeleinrichtung vorteilhafte Richtung wirkend ausgerichtet ist.

In einer bevorzugten Ausführungsform weist die Ballenpresse eine in einer zur Längsmittelachse des Presskanals orthogonal ausgerichteten Schwingenschwenkachsenebene angeordnete Schwingenschwenkachse schwenkbar gelagerte und von mindestens einer Antriebsanordnung angetriebene Nadelschwinge auf. Die Nadelschwinge weist mindestens eine durch Schwenkung der Nadelschwinge durch den Presskanal bewegliche Bindenadel auf. Die Antriebsanordnung umfasst ein um eine Antriebsdrehachse drehbar gelagertes Antriebselement und einen exzentrisch daran angeordneten Antriebshebel. Die Antriebsanordnung weist eine Koppeleinrichtung auf, welche um eine ortsfest gegenüber dem Presskanal positionierte Koppelschwenkachse schwenkbar angeordnet ist. Die Koppeleinrichtung ist von der Schwingenschwenkachse der Nadelschwinge beabstandet an der Nadelschwinge und der Antriebshebel an der Koppeleinrichtung angeordnet.

Durch das Vorsehen einer Koppeleinrichtung in der Antriebsanordnung der Nadelschwinge kann die Kinematik der Nadelschwinge gegenüber den bisher bekannten Ballenpressen verändert werden. Insbesondere ermöglicht es die Koppeleinrichtung, die an der Nadelschwinge angeordneten Bindenadeln im Vergleich zu einer herkömmlichen Antriebsanordnung schneller aus einer Ausgangstellung durch den Presskanal zu führen und somit ein einen Ballen umschlingendes Bindematerial zügiger dem Stoffschlusserzeuger zuzuführen. Durch die Verwendung einer Antriebsanordnung mit einer Koppeleinrichtung kann der Zeitabschnitt, in dem die Bindenadel im Bereich einer das Bindematerial verbindenden Einrichtung verbleibt, im Verhältnis zu dem Zeitabschnitt, der zum Durchführen der Bindenadel durch den Presskanal benötigt wird, verlängert werden. Somit kann die Dauer eines Bindezyklus insgesamt verkürzt werden, ohne dass wesentliche Änderungen an weiteren angetriebenen Teilen der Bindeeinrichtung vorgenommen werden müssen.

In einer vorteilhaften Ausführungsform umfasst die Ballenpresse eine Antriebsanordnung auf einer Seite des Presskanals. Hierdurch sind nur eine Koppeleinrichtung als Teil der Antriebsanordnung sowie nur eine Antriebsanordnung notwendig. Der bauliche Aufwand für die Antriebsanordnung der Nadelschwinge wird somit minimiert.

In einer alternativen vorteilhaften Ausführungsform umfasst die Ballenpresse je eine Antriebsanordnung auf zwei gegenüberliegenden Seiten des Presskanals. Hierdurch wird eine Kraft auf beiden Seiten der Nadelschwinge in diese eingeleitet. Durch die beidseitige Einleitung der Kraft werden Torsionskräfte auf die Nadelschwinge sowie auf die Antriebsanordnung reduziert. Dies erhöht die Lebensdauer der Ballenpresse, insbesondere wenn bei sehr schnellen Bewegungen der Nadelschwinge hohe Kräfte auf die Nadelschwinge und die Antriebsanordnungen einwirken.

Bevorzugt umfasst die Koppeleinrichtung einen ersten Koppelhebel und zumindest einen weiteren Koppelhebel, wobei der erste Koppelhebel mit dem weiteren Koppelhebel beweglich verbunden ist. Durch die Verwendung von zwei beweglich miteinander verbundenen Koppelhebeln wird eine mechanisch einfache Ausführungsform der Koppeleinrichtung realisiert, die die gewünschte Veränderung in der Kinematik der Nadelschwinge bewirken kann. Besonders bevorzugt ist der erste Koppelhebel um die Koppelschwenkachse schwenkbar angeordnet und der Antriebshebel ist an dem ersten Koppelhebel angeordnet. Durch das Anordnen des Antriebshebels am ersten Koppelhebel, der über die Koppelschwenkachse ortsfest gegenüber dem Presskanal festgelegt ist, sind diese Elemente der Antriebsanordnung definiert zueinander festgelegt. Hierdurch wird die Gefahr von Fehlfunktionen der Antriebsanordnung reduziert und die Zuverlässigkeit der Ballenpresse gesteigert.

Vorzugsweise sind die Schwingenschwenkachse, die Antriebsdrehachse und die Koppelschwenkachse parallel zueinander angeordnet. Dies ermöglicht einen einfachen Aufbau der Antriebsanordnung, da die Bewegungskomponenten der Nadelschwinge, des Antriebselementes und zumindest eines Teils der Koppeleinrichtung in zueinander parallelen Ebenen oder in derselben Ebene angeordnet sind. Dies ermöglicht die Verwendung von Verbindungselementen mit einem Freiheitsgrad.

Besonders bevorzugt sind die Schwenkachsen aller von der Koppeleinrichtung umfassten Gelenke parallel zur Schwingenschwenkachse positioniert. In diesem Fall sind alle Bewegungskomponenten der Antriebsanordnung in parallel zueinander angeordneten Ebenen oder in identischen Ebenen angeordnet. Dies vereinfacht die Konstruktion einer entsprechenden Antriebsanordnung weiterhin, da nun ausschließlich Verbindungselemente mit einem Freiheitsgrad zum Einsatz kommen können. Zudem ist die Zuverlässigkeit und Lebensdauer der Ballenpresse erhöht.

Vorteilhafterweise ist eine zur Antriebsdrehachse parallele Antriebshebeldrehachse, um die der Antriebshebel drehbar am Antriebselement angeordnet ist, in einer Ausgangsstellung, in der sich die Nadelschwinge vor und nach einem eine Ballenbindung abschließenden Nadelschwingenzyklus befindet, aus einer Koppelebene verlagert, in der die Antriebsdrehachse und eine Antriebskoppelschwenkachse, um die der Antriebshebel schwenkbar an der Koppeleinrichtung angeordnet ist, liegen. Die direkte Verbindung zwischen der Antriebsdrehachse und einer Antriebskoppelschwenkachse ist in der Ausgangsstellung in der Koppelebene angeordnet. Hierbei ist die Antriebskoppelschwenkachse die Achse, um die der Antriebshebel schwenkbar mit der Koppeleinrichtung verbunden ist. Die Antriebshebeldrehachse, um die herum der Antriebshebel drehbar am Antriebselement angeordnet ist, befindet sich in einer Ausgangsstellung nicht in der Koppelebene. Durch die Wahl der Lage der Antriebshebeldrehachse relativ zur Koppelebene kann die Kinematik der Nadelschwinge während des Nadelschwingenzyklus beeinflusst werden. Hierdurch ist es möglich, den Nadelschwingenzyklus an das gewünschte Verhalten anzupassen. Besonders vorteilhaft liegen die Antriebsdrehachse und die Antriebshebeldrehachse in einer Triebebene, die in einer Ausgangsstellung um 30° bis 90° gegenüber der Koppelebene geneigt positioniert ist. Ausgehend von der Modifizierung bekannter Nadelschwingenantriebe von Ballenpressen hat sich eine Positionierung der Antriebshebeldrehachse in einem Bereich, der 30° bis 90° gegenüber der Koppelebene geneigt ist, als vorteilhaft erwiesen. Hierdurch erfährt die Nadelschwinge bei der Bewegung aus der Ausgangsstellung eine höhere anfängliche Beschleunigung, die die Zeit, die Bindenadel zum Durchqueren des Presskanals benötigen, im Vergleich zu der um einen oberen Totpunkt herum verbrachten Zeit der Bindenadel verkürzt.

Bevorzugt haben der gegenüber dem Presskanal ortsfest angeordnete Bereich der Koppeleinrichtung und der an der Nadelschwinge angeordnete Bereich der Koppeleinrichtung in der Ausgangsstellung einen im Wesentlichen maximal möglichen Abstand voneinander. So ist es möglich, nur einen Teil einer Umdrehung des Antriebselementes für die Bewegung der Bindenadel aus der Ausgangsstellung durch den Presskanal zu einem oberen Totpunkt und wieder heraus aus dem Presskanal zu verwenden. Der verbleibende Teil der Umdrehung des Antriebelements bewirkt eine Auslenkung der Koppeleinrichtung in eine der ersten Auslenkung entgegengesetzte Richtung bis die Koppeleinrichtung wieder eine gestreckte Stellung und die Nadelschwinge damit wieder die Ausgangsstellung erreicht. Dabei taucht die Bindenadel noch einmal zumindest teilweise in den Presskanal ein. Das Durchtauchen, also das Auslenken der Koppeleinrichtung in eine der ersten Auslenkung entgegengesetzten Richtung, sowie das Eintauchen der Bindenadel in den Presskanal kann durch das Vorsehen von geeigneten Sperrvorrichtungen, beispielsweise in Form von Anschlagselementen, in der Koppeleinrichtung vermieden werden. Die Vollendung der Umdrehung des Antriebselements muss jedoch dennoch gewährleistet bleiben. Dies kann beispielsweise durch das Anbringen von elastischen Elementen in oder an dem Antriebshebel realisiert werden. Diese können zum Beispiel durch Federelemente ausgebildet sein.

Bevorzugt ist bei einer maximalen Schwenkung der Nadelschwinge ein im Presskanal angeordneter Presskolbenantrieb im Wesentlichen in einer Strecklage positioniert. In der Strecklage ist der Presskolben maximal in den Presskanal eingeführt und bringt den maximalen Pressdruck auf den zu bindenden Ballen auf. Wenn die Bindenadel mit Erreichen der Strecklage des Presskolbens im oberen Totpunkt ist und das Bindematerial an den Stoffschlusserzeuger übergibt, kann der Ballen mit maximal möglicher Pressdichte gebunden und die Dichte des Ballens maximiert werden. Somit erhöht sich die Leistungsfähigkeit der Ballenpresse. Die Bindenadel durchläuft in der vorliegenden Ausgestaltung der erfindungsgemäßen Ballenpresse den Presskanal von einer Ausgangsstellung bis zum oberen Totpunkt in weniger als 0,5 Sekunden. Dies stellt eine deutliche Zeitersparnis gegenüber den 0,6 bis 0,7 Sekunden bei den bekannten, konventionell angetriebenen Ballenpressen dar.

Mit Vorteil umfasst die Nadelschwinge mindestens drei sich jeweils im Wesentlichen in zur Schwingenschwenkachse senkrechten Ebenen erstreckende Bindenadeln. Ein zu bindender Ballen wird entsprechend mindestens an drei verschiedenen Stellen von Bindematerial umschlungen. Dies erhöht die Festigkeit und Stabilität der gebundenen Ballen und ermöglicht somit dichter gepresste Ballen und damit eine höhere Leistungsfähigkeit der Ballenpresse.

Vorzugsweise ist das Antriebselement an einer einen Bindezyklus mit einer Umdrehung steuernden Steuerwelle angeordnet. Bei herkömmlichen Ballenpressen werden die für das Verbinden des Bindematerials notwendigen Elemente über eine zentrale Steuerwelle gesteuert. Hierbei wird regelmäßig ein Bindezyklus durch eine Umdrehung der Steuerwelle gesteuert. Durch das Anordnen des Antriebselementes an der Steuerwelle wird die Bewegung der Nadelschwinge und damit der Bindenadeln vom Antrieb der das Bindematerial verbindenden Elemente abhängig gemacht. Hierdurch wird die Zuverlässigkeit und Verfügbarkeit der Ballenpresse verbessert.

Weitere Einzelheiten und Vorteile der Erfindung sind den folgend beschriebenen, schematisch dargestellten Ausführungsbeispielen zu entnehmen. Es zeigen:
- Fig. 1: eine Übersichtsdarstellung eines Ausführungsbeispiels einer erfindungsgemäßen Ballenpresse für landwirtschaftliches Erntegut;
- Fig. 2: eine Übersichtsdarstellung eines Ausführungsbeispiels einer Nadelschwinge sowie eines Antriebselements, des Antriebshebels und der Koppeleinrichtung;
- Fig. 3: eine Seitenansicht der Nadelschwinge gemäß Fig. 2 in Ausgangsstellung an der Ballenpresse;
- Fig. 4: eine Seitenansicht der Nadelschwinge gemäß Fig. 2 zwischen Ausgangsstellung und oberem Totpunkt an der Ballenpresse;
- Fig. 5: eine Seitenansicht der Nadelschwinge gemäß Fig. 2 im oberen Totpunkt an der Ballenpresse;
- Fig. 6: ein Schwenkwinkel-zu-Drehwinkel-Diagramm zur Nadelschwingenbewegung;
- Fig. 7: eine Übersichtsdarstellung eines Ausführungsbeispiels eines Bindetisches mit Bindenadeln der Nadelschwinge gemäß Fig. 2 im oberen Totpunkt;
- Fig. 8: eine Übersichtsdarstellung des Bindetisches zwischen zwei Bindezyklen;
- Fig. 9: eine Übersichtsdarstellung der Ballenpresse nach Fig. 1 mit Abrolleinrichtung;
- Fig. 10: eine Übersichtsdarstellung der Abrolleinrichtung nach Fig. 9 und einer Regeleinrichtung;
- Fig. 11: eine Übersichtsdarstellung der Regeleinrichtung nach Fig. 10;
- Fig. 12: eine Übersichtsdarstellung eines Ausführungsbeispiels eines Bandspeichers;
- Fig. 13: eine schematische Darstellung der Schritte eines Verlaufes eines Bindezyklus mit Veranschaulichung der Stellung der Teile einer Bindeeinrichtung auf einem Bindetisch und zwar beginnend mit Fig. 13a und endend mit Fig. 13i, jeweils in der Ausgangsstellung;
- Fig. 14: eine Übersichtsdarstellung eines Ausführungsbeispiels eines Schwenkelementes inklusive einem Schwenkelementantrieb;
- Fig. 15: eine Übersichtsdarstellung eines Ausführungsbeispiels eines Stoffschlusserzeugers inklusive einem Stoffschlusserzeugerantrieb;
- Fig. 16: eine Übersichtsdarstellung des geöffneten Stoffschlusserzeugers nach Fig. 15;
- Fig. 17: eine Übersichtsdarstellung des geschlossenen Stoffschlusserzeugers nach Fig. 15;
- Fig. 18: eine Übersichtsdarstellung eines Ausführungsbeispiels einer vorderen Klemmvorrichtung inklusive einem ersten Klemmvorrichtungsantrieb;
- Fig. 19: eine Übersichtsdarstellung der geöffneten vorderen Klemmvorrichtung nach Fig. 18;
- Fig. 20: eine Übersichtsdarstellung der geschlossenen vorderen Klemmvorrichtung nach Fig. 18;
- Fig. 21: eine Übersichtsdarstellung der vorderen Klemmvorrichtung nach Fig. 18 mit einem ausweichenden Gegenhalter;
- Fig. 22: eine Übersichtsdarstellung eines Ausführungsbeispiels einer hinteren Klemmvorrichtung inklusive einem zweiten Klemmvorrichtungsantrieb;
- Fig. 23: eine Übersichtsdarstellung der hinteren Klemmvorrichtung nach Fig. 22 mit einem Gegenschwenkelement;
- Fig. 24a: eine Übersichtsdarstellung eines Ausführungsbeispiels einer Kühleinrichtung;
- Fig. 24b: einen schematischen Schaltplan der Kühleinrichtung;
- Fig. 25: eine Übersichtsdarstellung mehrerer Bandführungselemente an einem Führungsträgerelement;

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1.

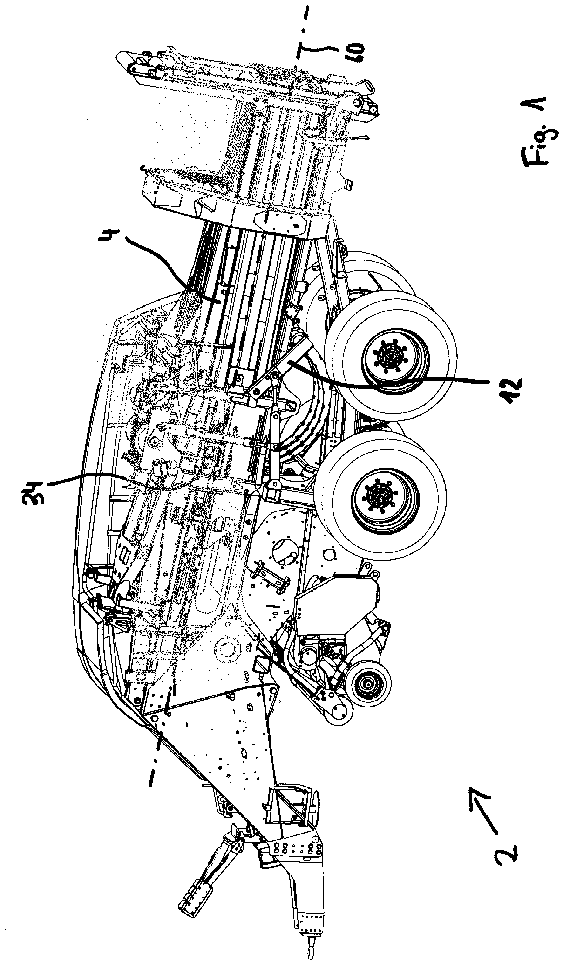

Fig. 1 zeigt eine erfindungsgemäße Ballenpresse 2 für landwirtschaftliches Erntegut. Die Ballenpresse 2 wird im Betrieb an eine landwirtschaftliche Zugmaschine angehängt und presst während der Fahrt mit einem Presskolben 34 kontinuierlich Ballen, die innerhalb eines Presskanals 4 von einem Umschlingungsmittel umhüllt werden und schließlich den Presskanal 4 durch eine vom Presskolben 34 abgewandte Öffnung verlassen. Der Presskanal 4 hat einen rechteckigen Querschnitt, durch dessen Zentrum eine Längsmittelachse des Presskanals 60 verläuft.

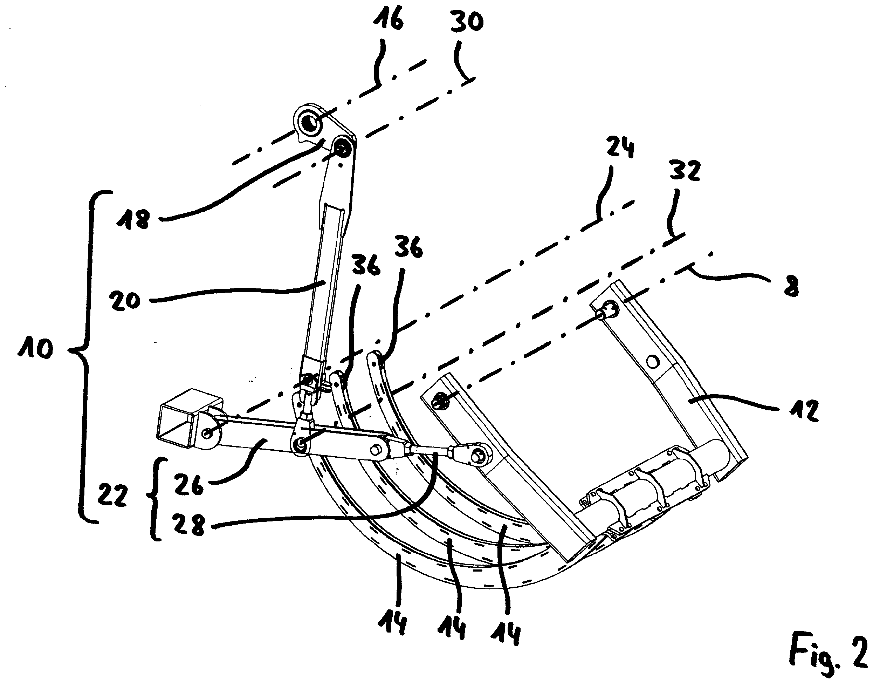

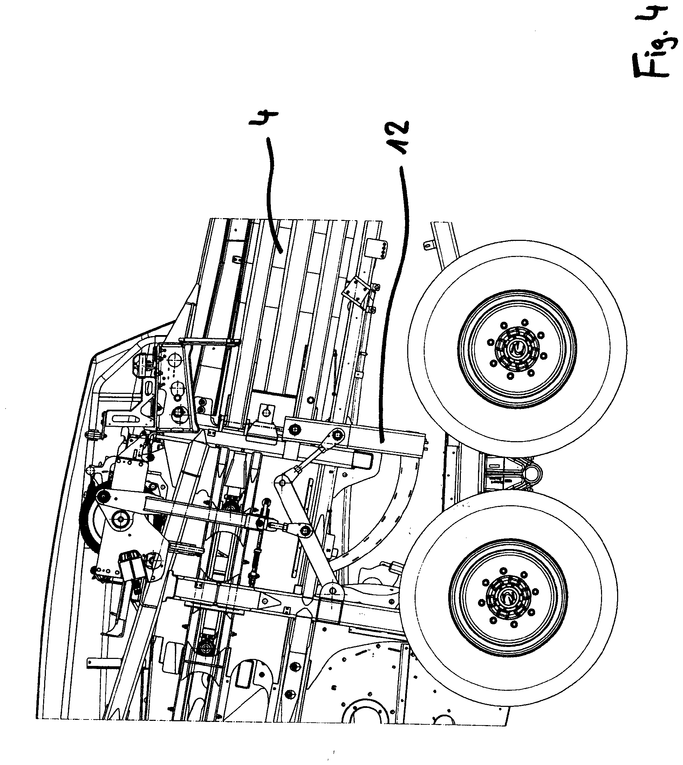

Eine von der Ballenpresse 2 umfasste Nadelschwinge 12 ist in den Fig. 2 bis 5 in unterschiedlichen Positionen dargestellt. Die Nadelschwinge 12 mit Bindenadeln 14 ist schwenkbar um eine Schwingenschwenkachse 8 gelagert. Die Schwingenschwenkachse 8 ist ortsfest gegenüber dem Presskanal 4. Angetrieben wird die Nadelschwinge 12 von einer Antriebsanordnung 10. Die Antriebsanordnung 10 umfasst ein Antriebselement 18, das um eine gegenüber dem Presskanal 4 ortsfeste Antriebsdrehachse 16 drehbar gelagert ist. An dem Antriebselement 18 ist ein Antriebshebel 20 drehbar um eine Antriebshebeldrehachse 30 gelagert.

Der Antriebshebel 20 ist mit der Nadelschwinge 12 über eine Koppeleinrichtung 22 verbunden. Die Koppeleinrichtung 22 umfasst einen ersten Koppelhebel 26 und einen weiteren Koppelhebel 28. Der erste Koppelhebel 26 ist um eine Koppelschwenkachse 24 schwenkbar angeordnet, wobei die Koppelschwenkachse 24 ortsfest gegenüber dem Presskanal 4 ist. Der weitere Koppelhebel 28 ist zum einen wiederum schwenkbar am ersten Koppelhebel 26 angeordnet und zum anderen schwenkbar und von der Schwingenschwenkachse 8 beabstandet an der Nadelschwinge 12 angeordnet. Der Antriebshebel 20 ist dabei schwenkbar um eine Antriebskoppelschwenkachse 32 am ersten Koppelhebel 26 festgelegt.

Die Schwingenschwenkachse 8 liegt in einer Schwingenschwenkachsenebene, zu welcher die Längsmittelachse des Presskanals 60 orthogonal ist. Die Antriebsdrehachse 16, die Antriebshebeldrehachse 30, die Koppelschwenkachse 24 und die Antriebskoppelschwenkachse 32 sind dabei parallel zur Schwingenschwenkachse 8 positioniert.

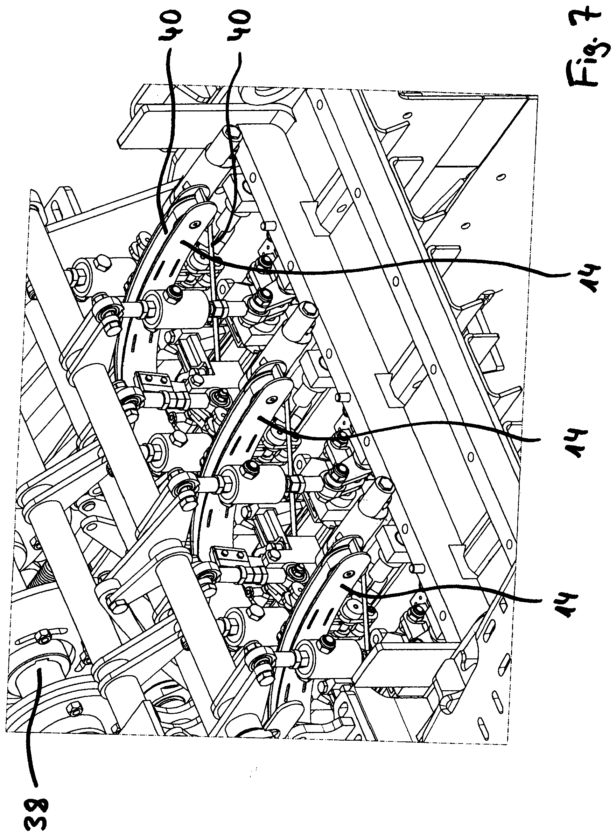

Das Antriebselement 18 ist angeordnet an einer Steuerwelle 38 (vgl. Fig. 7). Diese Steuerwelle 38 steuert mit einer Umdrehung einen Bindezyklus. Während eines Bindezyklus werden zwei Enden eines den gepressten Ballen umhüllenden Umschlingungsmittels miteinander verbunden. Teil des Bindezyklus ist die Führung des Umschlingungsmittels durch den Presskanal 4 anhand der Bindenadeln 14. Die Nadelschwinge 12 weist in Fig. 2 drei Bindenadeln 14 auf. Diese umfassen jeweils eine Führungsrolle 36.

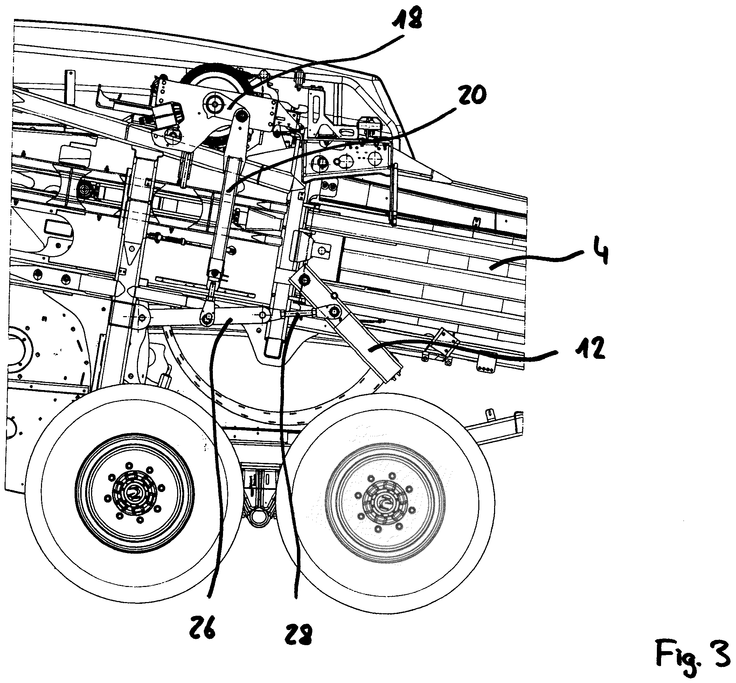

Die Fig. 3 bis 5 zeigen die Nadelschwinge 12 in drei unterschiedlichen Stellungen. In Fig. 3 befindet sich die Nadelschwinge 12 in einer Ausgangsstellung. Dabei liegen die Bindenadeln 14 vollumfänglich außerhalb des Presskanals 4. In dieser Ausgangsstellung befindet sich die Nadelschwinge 12 vor und nach einem jeden Bindezyklus. Kennzeichnend dabei ist, dass die Koppelschwenkachse 24 und der an der Nadelschwinge 12 angeordnete Bereich der Koppeleinrichtung 22 einen maximal möglichen Abstand voneinander haben, d. h., dass die Koppeleinrichtung 22 gestreckt ist. Gleichzeitig liegen die Antriebsdrehachse 16, die Antriebshebeldrehachse 30 und die Koppelschwenkachse 24 nicht in einer Ebene. Antriebselement 18 und Antriebshebel 20 sind als Einheit betrachtet nicht gestreckt.

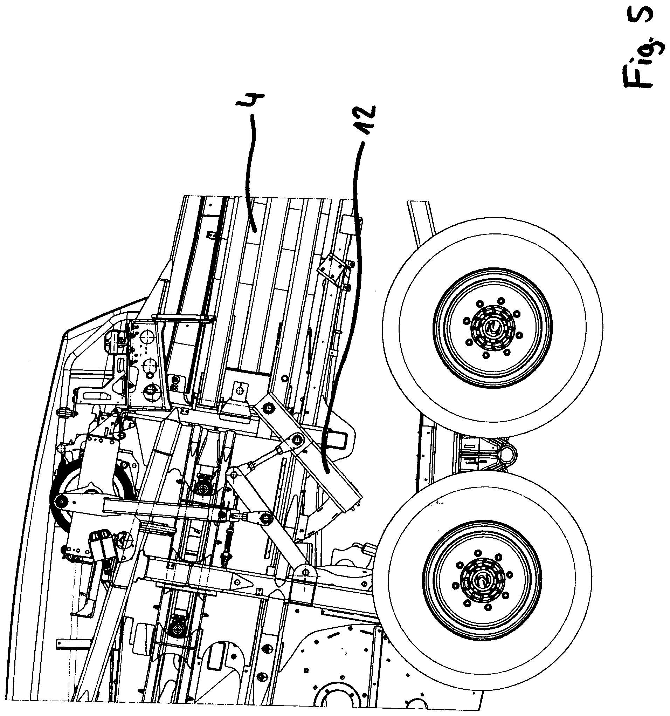

Während eines Bindezyklus wird die Nadelschwinge 12 bei konstanter Winkelgeschwindigkeit des Antriebselementes 18 schneller von der Ausgangsstellung in den oberen Totpunkt der Nadelschwinge 12 (vgl. Fig. 5) geschwenkt, als wenn Antriebselement 18 und Antriebshebel 20 als Einheit in der Ausgangsstellung gestreckt wären.

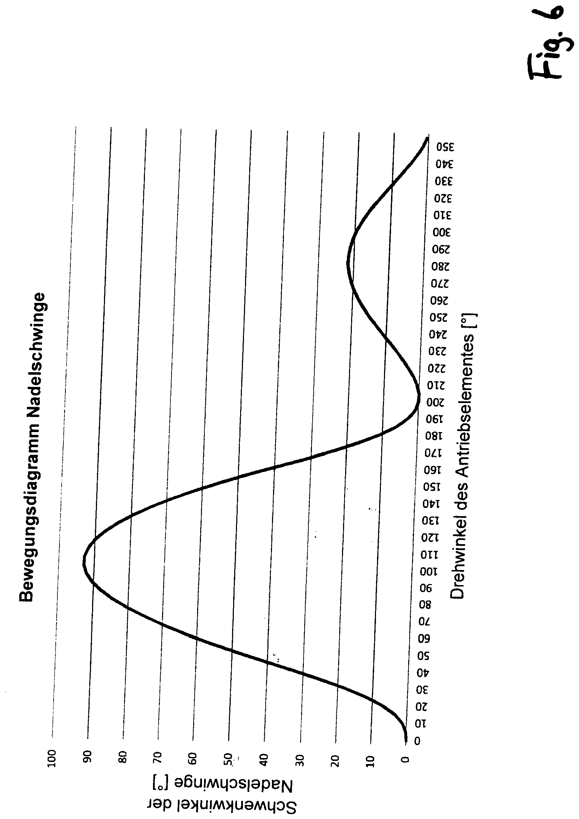

Folge davon ist, dass bei der Rückkehr der Nadelschwinge 12 in die Ausgangsstellung die Koppeleinrichtung 22, nachdem sie bei einem Drehwinkel des Antriebselementes 18 von weniger als 360° bereits gestreckt wurde, erneut zu einem geringeren Maße verkürzt wird. Dabei werden die Bindenadeln 14 nach Abschluss des Bindezyklus erneut zu einem Teil in den Presskanal 4 geführt, bevor die Ausgangsstellung der Nadelschwinge 12 wieder hergestellt ist. Dieser Bewegungsablauf der Nadelschwinge 12 wird durch das Bewegungsdiagramm in Fig. 6 dargestellt. Dabei ist sowohl der Schwenkwinkel der Nadelschwinge 12 als auch der Drehwinkel des Antriebschenkels 18 in der Ausgangsstellung gleich Null.

Fig. 7 zeigt einen Bindetisch der Ballenpresse 2 oberhalb des Presskanals 4. Außerdem sind Teile der drei Bindenadeln 14 dargestellt, die ein bandförmiges Bindematerial 40 führen, während sich die Nadelschwinge 12 im oberen Totpunkt befindet

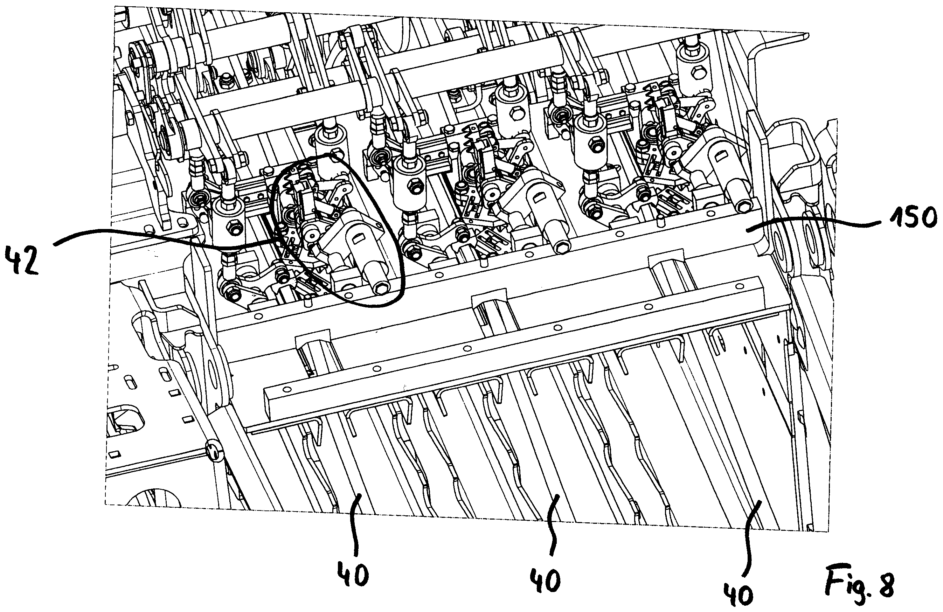

Fig. 8 zeigt eine weitere perspektivische Übersichtsdarstellung des Bindetisches mit drei Stoffschlusserzeugern 42 und den stoffschlüssig zu verbindenden bandförmigem Bindematerial 40. In dieser Darstellung befindet sich die nicht sichtbare Nadelschwinge 12 in der Ausgangsstellung und der Ballen wird durch den Presskolben 34 gepresst. Es ist ein Teil der Bindeeinrichtungen, welcher auf dem Bindetisch angeordnet ist, zwischen zwei Bindezyklen dargestellt.

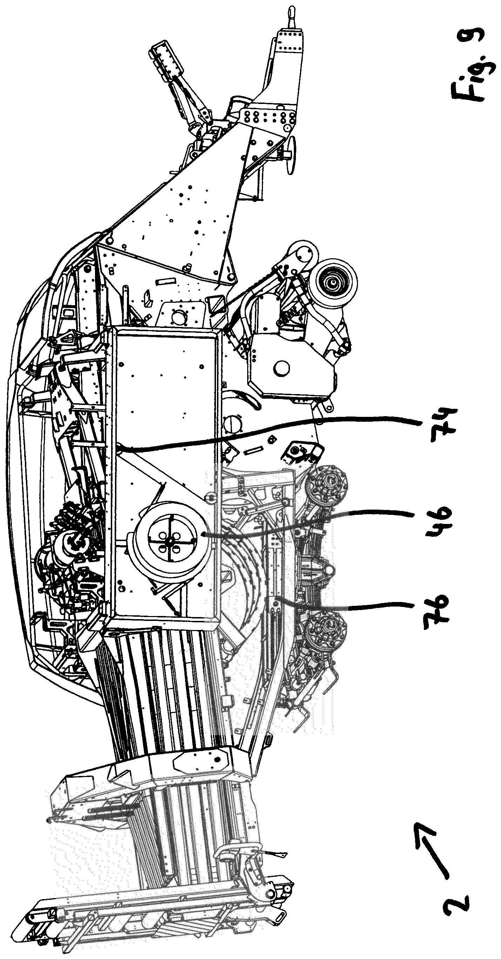

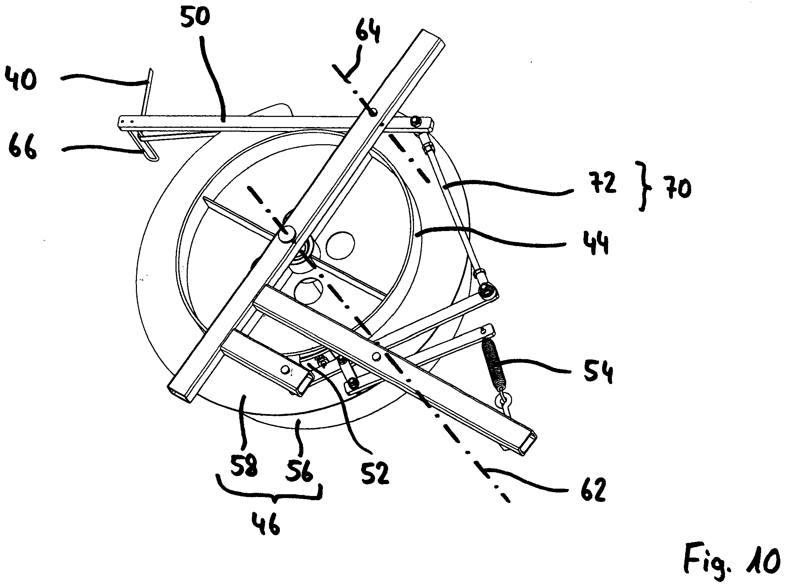

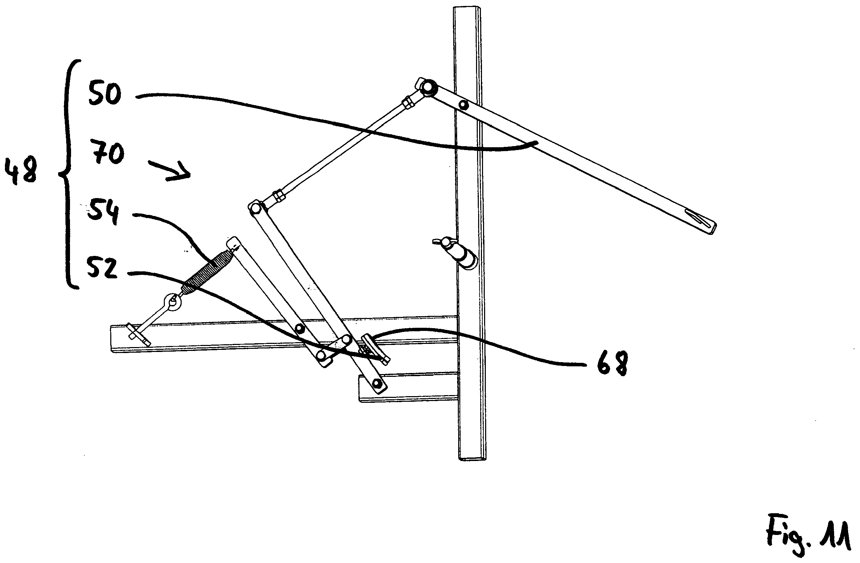

Fig. 9 ist eine Übersichtsdarstellung der erfindungsgemäßen Ballenpresse 2 und zeigt bezüglich der Fig. 1, 3, 4 und 5 ihre gegenüberliegende Seite. An dieser Seite angeordnet ist eine Abrolleinrichtung 46, die ein bandförmiges Bindematerial 40 zur Umhüllung der Ballen bevorratet. Weiterhin sind Teile einer Regeleinrichtung 48 dargestellt, die in den folgenden Fig. 10 und 11 detailliert dargestellt sind. Fig. 10 zeigt gegenüber Fig. 9 die Rückseite der Abrolleinrichtung 46 und der Regeleinrichtung 48. Die Abrolleinrichtung 46 weist eine wechselbare Bandrolle 56 und einen Bandrollenträger 58 auf. Die Abrolleinrichtung 46 ist um eine Abrolldrehachse, welche ortsfest gegenüber dem Presskanal 4 angeordnet ist, drehbar.

Die Abrolleinrichtung 46 weist eine Bremskontaktfläche 44 auf, die die Form einer Kreiszylindermantelfläche hat. In einer Bremsstellung, in der die Regeleinrichtung 48 in Fig. 10 dargestellt ist, liegt an der Bremskontaktfläche 44 ein Bremselement 52 mit einer Bremselementfläche 68 an, welches Teil der Regeleinrichtung 48 ist. Über eine Übertragungsvorrichtung 70 ist das Bremselement 52 mit einem Regelelement 50 verbunden. An dem Regelelement 50 ist ein Führungselement 66 angeordnet, das als Öse ausgebildet ist.

Durch dieses Führungselement 66 verläuft das bandförmige Bindematerial 40, nachdem es von der Abrolleinrichtung 46 abgerollt wurde. Eine Erhöhung der Bandspannung verursacht dabei ein Schwenken des Regelelementes 50 um eine Regelelementschwenkachse 64, die parallel zur Abrolldrehachse 62 positioniert ist. Diese Schwenkbewegung, die von der Übertragungsvorrichtung 70 untersetzt auf das Bremselement 52 übertragen wird, führt zu einem Lösen des Bremselementes 52 mit der Bremselementfläche 68 von der Bremskontaktfläche 44. Durch ein Bremsrückstellelement 54 wird die Übertragungsvorrichtung 70 mit einer entgegen dieser Bewegung wirkenden Kraft beaufschlagt. Bei Nachlassen der Bandspannung bewirkt das Bremsrückstellelement 54 eine Rückführung der Regeleinrichtung 48 in die Bremsstellung.

Zur Einstellung der Sensibilität der Regeleinrichtung 48 ist an das Regelelement 50 ein Steuerhebel 72 angeordnet, der längenverstellbar ist. Fig. 9 zeigt über die Abrolleinrichtung 46 und die Regeleinrichtung 48 hinaus ein Umlenkelement 74, das einen Teil des bandförmigen Bindematerials 40 nach Durchlaufen des Führungselementes 66 umlenkt.

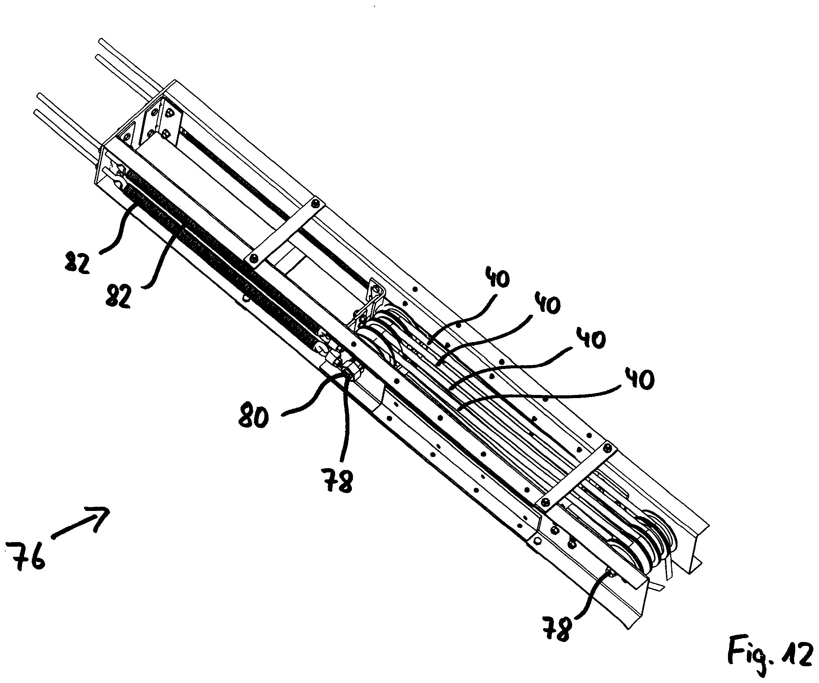

Fig. 9 zeigt unterhalb des Presskanals 4 einen Bandspeicher 76, dem das bandförmige Bindematerial 40, nachdem es von der Abrolleinrichtung 46 abgerollt wurde, zugeführt wird. Dieser Bandspeicher 76 ist in Fig. 12 im Detail dargestellt.

Der Bandspeicher 76 hat zwei Bandspeicherachskörper 78. Auf dem Freiachskörper sind vier, auf dem weiteren Bandspeicherachskörper fünf Rollen angeordnet. Das Bindematerial 40, welches sich zwischen Abrolleinrichtung 46 und Stoffschlusserzeuger 42 befindet, umwickelt die Rollen der Bandspeicherachskörper 78 nach Art eines Flaschenzuges. Dabei umschlingt das bandförmige Bindematerial 40 abwechselnd und jeweils halbseitig den Umfang der Rollen der unterschiedlichen Bandspeicherachskörper 78. Einer der Bandspeicherachskörper 78 ist ein beweglich gelagerter Freiachskörper 80. Dieser wird durch ein Bandspeicherrückstellelement 82 mit einer Kraft beaufschlagt, die eine den Abstand der beiden Bandspeicherachskörper 78 voneinander vergrößernde Bewegung bewirkt. Durch die Vergrößerung des Abstandes vergrößert sich die von Bandspeicher 76 gespeicherte Länge des bandförmigen Bindematerials 40 um ein Vielfaches der Differenz der Abstände der Bandspeicherachskörper 78 vor und nach der Abstandsvergrößerung.

Haben die Bandspeicherrückstellelemente 82 den Abstand der beiden Bandspeicherachskörper 78 allmählich zwischen zwei Bindezyklen erhöht, stellt der Bandspeicher 76 die Menge an bandförmigem Bindematerial 40 bereit, die für eine Bewegung der zugeordneten Bindenadeln 14 an der Nadelschwinge 12 von ihrer Ausgangsstellung bis in den oberen Totpunkt zum Führen des Bindematerials an den Bindetisch erforderlich ist. Gleichzeitig verhindert der Bandspeicher 76 große Beschleunigungen der Abrolleinrichtung 46, da durch die Bandspeicherrückstellelemente 82 das bandförmige Bindematerial 40 nur mit einer moderaten Bandspannung, welche die Regeleinrichtung 48 bewegt, allmählich von der Abrolleinrichtung 46 abgerollt wird.

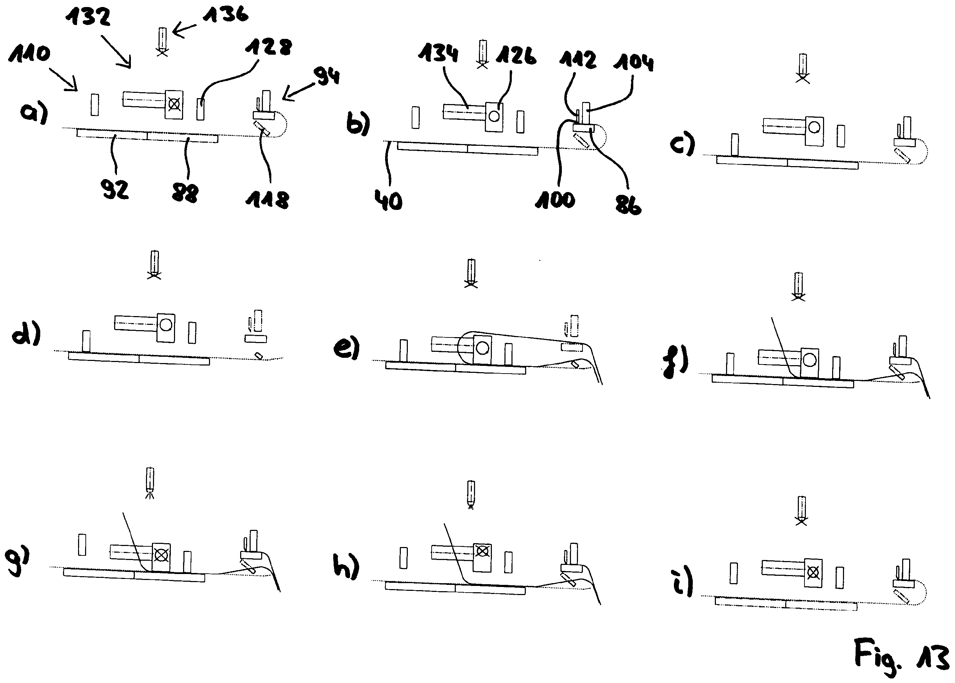

Fig. 13 zeigt eine Serie von Prinzipdarstellungen, die den Ablauf eines Bindezyklus und die Funktion der auf dem Bindetisch angeordneten Komponenten verdeutlicht. Dargestellt sind jeweils eine vordere Klemmvorrichtung 94, eine Schneidvorrichtung 100, ein Gegenhalter 86, ein Niederhalter 118, ein Schwenkelement 88 und ein Gegenschwenkelement 92, eine hintere Klemmvorrichtung 110, eine Reibschweißeinrichtung 132 mit einer Schweißklemmeinrichtung 128 sowie eine Düse 136 der Kühlungseinrichtung.

In den neun Figurteilen 13a bis 13i dargestellt werden jeweils die genannten Komponenten einer Bindeeinrichtung auf dem Bindetisch. Dabei befindet sich gemäß der Darstellungen der Presskolben 34 der Ballenpresse 2 rechts von den dargestellten Komponenten und die Öffnung des Presskanals 4, durch die die gepressten Ballen diesen verlassen, links davon. Ein erstes Ende des bandförmigen Bindematerials 40 ist mit einer gestrichelten Linie, ein weiterer Teil davon mit einer durchgezogenen Linie dargestellt.

Fig. 13a zeigt eine Ausgangsposition der Bindeeinrichtung, in der das bandförmige Bindematerial 40 von der vorderen Klemmvorrichtung 94 geklemmt ist. In dieser Ausgangsposition umschlingt das bandförmige Bindematerial 40 den Gegenhalter 86 U-förmig und erstreckt sich im weiteren Verlauf in Richtung der hinteren oberen Querkante des gepressten Ballens. In dieser Position befinden sich die weiteren dargestellten Komponenten in vom bandförmigen Bindematerial 40 beabstandeten Positionen.

Fig. 13b zeigt, dass das Schwenkelement 88 und das Gegenschwenkelement 92 zu Beginn des Bindezyklus in die dargestellte Bandebene verschwenkt werden. Zuvor (vgl. Fig. 13a) befanden sie sich außerhalb einer Bandebene, in der die Bindeeinrichtung für diese Darstellungen geschnitten ist. Gleichzeitig mit dem Verschwenken des Schwenkelementes 88 und des Gegenschwenkeklementes 92 wird die Reibschweißeinrichtung 132 aktiviert. Dazu wird die Luftzufuhr zu einem die Reibschweißeinrichtung 132 antreibenden Druckluftmotor 134 aktiviert.

Fig. 13c zeigt in einem folgenden Schritt die hintere Klemmvorrichtung 110 abgesenkt und dass sie das bandförmige Bindematerial 40 auf dem Gegenschwenkelement 92 einklemmt. Das ermöglicht, dass sich die vordere Klemmvorrichtung 94 in einem folgenden Schritt (vgl. Fig. 13d) öffnen kann, ohne dass die Festlegung des den Ballen umschlingenden Teils des bandförmigen Bindematerials 40 beeinträchtigt wird. Gleichzeitig mit der Öffnung der vorderen Klemmvorrichtung 94 schwenkt ein Niederhalter 118 in die dargestellte Bandebene. Dieser stellt sicher, dass der rechts von der hinteren Klemmvorrichtung 110 liegende Bandabschnitt unterhalb der Reibschweißeinrichtung 132 angeordnet bleibt.

Fig. 13e zeigt darauf folgend einen weiteren schlaufenförmigen Bandabschnitt (als durchgezogene Linie dargestellt) desselben Bindematerials, den eine Bindenadel 14 durch den Presskanal 4 in den prinzipiell dargestellten Bereich des Bindetisches führt. Der Gegenhalter 86 weicht, ermöglicht durch die Öffnung der vorderen Klemmvorrichtung 94, dem Bindematerial zeitweilig aus und befindet sich dabei aus der dargestellten Bandebene verlagert. Während die Nadelschwinge 12 im Bereich des oberen Totpunktes liegt, schließt sich die Reibschweißeinrichtung 132 und mit ihr die Schweißklemmeinrichtung 128. Daraufhin liegt das bandförmige Bindematerial 40 zweilagig zwischen der Reibschweißeinrichtung 132 bzw. der Schweißklemmeinrichtung 128 und dem Schwenkelement 88. Sobald Kontakt zwischen beiden geklemmten Lagen und der Reibschweißeinrichtung 132 hergestellt ist, beginnt aufgrund der bereits erfolgten Aktivierung des Druckluftmotors 134, der die Reibschweißeinrichtung 132 antreibt, der Schweißvorgang.

Fig. 13f zeigt, dass der Schweißvorgang bis zu diesem nächsten Schritt andauert. Die Bindenadel 14 hat den Bereich des Bindetisches verlassen, dabei hat der Gegenhalter 86 die zuvor von der Bindenadel 14 geführte Schlaufe des Bindematerials 40 nach seiner Rückverlagerung in die Bandebene gefangen. Daraufhin wird die vordere Klemmvorrichtung 94 und damit, jedoch der Klemmenbewegung nacheilend, die Schneidvorrichtung 100 geschlossen. Somit wird die Schlaufe des bandförmigen Bindematerials 40 zwischen Reibschweißeinrichtung 132 und vorderer Klemmvorrichtung 94 getrennt. Der Teil des bandförmigen Bindematerials 40, dessen Enden unter der Schweißklemmeinrichtung 128 liegen, umhüllt den fertig gepressten Ballen. Der mit einer durchgezogenen Linie dargestellte Bandabschnitt wird während des andauernden Schweißvorgangs durch die geschlossene Schweißklemmeinrichtung 128 fixiert.

Fig. 13g zeigt die Komponenten der Bindeeinrichtung, nachdem die Reibschweißeinrichtung 132 gestoppt wurde. Sie bleibt dabei, ebenso wie die Schweißklemmeinrichtung 128, geschlossen. Die Druckluft, die zuvor dem Druckluftmotor 134 für die Reibschweißeinrichtung 132 zugeführt wurde, wird nun der Düse 136 zugeführt, die die Schweißverbindung kühlt. Geschlossen bleiben die Reibschweißeinrichtung 132 und die Schweißklemmeinrichtung 128, weil dadurch eine Relativbewegung der noch heißen verschweißten Bandabschnitte verhindert wird. Fig. 13g zeigt außerdem, dass die hintere Klemmvorrichtung 110 geöffnet wird.

Fig. 13h zeigt die gleichen Komponenten, nachdem sich die Reibschweißeinrichtung 132 und die Schweißklemmeinrichtung 128 geöffnet haben. Die Enden des den Ballen umhüllenden bandförmigen Bindematerials 40 halten aufgrund der hergestellten und gekühlten stoffschlüssigen Verbindung aneinander. Durch die Kühlung wird die zum Erkalten der Schweißstelle benötigte Zeit reduziert. Damit ist der gepresste Ballen stoffschlüssig umschlungen. Im Folgenden (vgl. Fig. 13i) werden das Schwenkelement 88 und das Gegenschwenkelement 92 aus der dargestellten Bandebene herausgeschwenkt. Dadurch liegen sie nicht mehr zwischen dem den Ballen umhüllenden bandförmigen Bindematerial 40 und dem landwirtschaftlichen Erntegut und der umhüllte Ballen kann aus dem Presskanal 4 formstabil ausgebracht werden.

Beim Schwenken des Schwenkelementes 88 und des Gegenschwenkelementes 92 wird außerdem die Luftzufuhr, welche zuletzt zu der Düse 136 geführt wurde, beendet. Der Abschnitt des bandförmigen Bindematerials 40, der nach dem Schließen der Schneidvorrichtung 100 (vgl. Fig. 13f) durch die vordere Klemmvorrichtung 94 geklemmt wird, erstreckt sich entsprechend des gestrichelt dargestellten Bandabschnitts in Fig. 13a. Dabei wird dieser Abschnitt mit wachsender Länge des zu pressenden Ballens zu einem wachsenden Winkel von dem Gegenhalter 86 umgelenkt, bis er sich bei Erreichen einer maximalen Ballenlänge U-förmig an den Gegenhalter 86 anlegt. Wird ein erneuter Bindezyklus ausgelöst, finden die dargestellten Schritte des Bindezyklus erneut wie beschrieben statt.

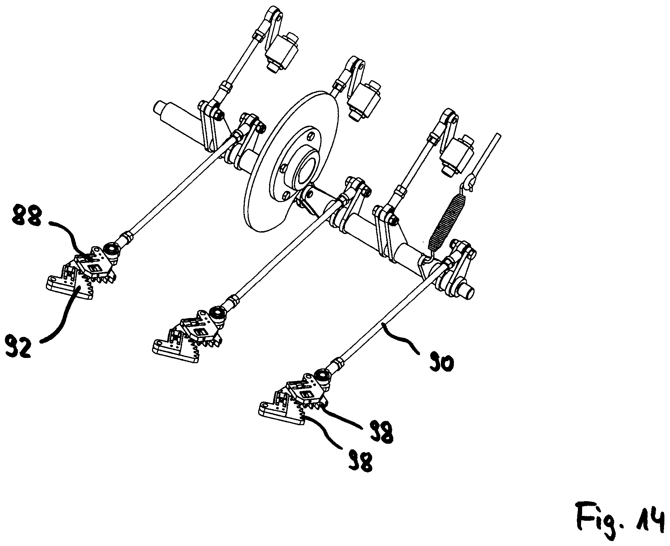

Die folgenden Fig. 14 bis 23 zeigen die in Fig. 13 symbolisch dargestellten Komponenten der Bindeeinrichtung in Übersichtsdarstellungen. Fig. 14 zeigt drei Schwenkelemente 88 und drei Gegenschwenkelemente 92. Jedes Schwenkelementpaar, bestehend aus einem Schwenkelement 88 und einem Gegenschwenkelement 92, ist dabei einer Bindeeinrichtung zugeordnet. Entsprechend der Beschreibung des Bindezyklus sind die Schwenkelementpaare zwischen bandförmigem Bindematerial 40 und den zu pressenden Ballen einbringbar und auf dem Bindetisch positioniert. Am Schwenkelement 88 ist ein Schwenkelementsteuerhebel 90 angelenkt. Das Schwenkelement 88 schwenkt um eine Schwenkachse, die in einer Schwenkachsenebene liegt, zu welcher die Längsmittelachse des Presskanals 60 orthogonal positioniert ist. Das Gegenschwenkelement 92 ist jeweils um eine parallele Schwenkachse, die in Richtung der Längsmittelachse des Presskanals von der ersten Schwenkachse beabstandet ist, schwenkbar. Übertragen wird die Schwenkbewegung vom Schwenkelement 88 auf das Gegenschwenkelement 92 durch Teilzahnkreise, die sowohl die Schwenkelemente 88 als auch die Gegenschwenkelemente 92 aufweisen. Die Teilzahnkreise 98 von Schwenkelement 88 und Gegenschwenkelement 92 befinden sich jeweils im Eingriff, so dass eine Schwenkbewegung des Schwenkelements 88 eine äquivalente Schwenkbewegung des Gegenschwenkelements 92 verursacht.

Fig. 14 zeigt außerdem eine Hebelwelle, an die der Schwenkelementsteuerhebel 90 angeordnet ist. Eine Schwenkbewegung dieser Hebelwelle wird durch eine dargestellte und auf der Steuerwelle 38 befestigte Kurvenscheibe geführt. Neben der Bewegung der Schwenkelementpaare wird durch die dargestellte Hebelwelle ein Druckluftventil 144 gesteuert, welches die Luftzufuhr zum Druckluftmotor 134 bzw. zur Düse 136 regelt. Die Hebelwelle wird durch eine Spiralfeder gegen die Kurvenscheibe zurückgestellt.

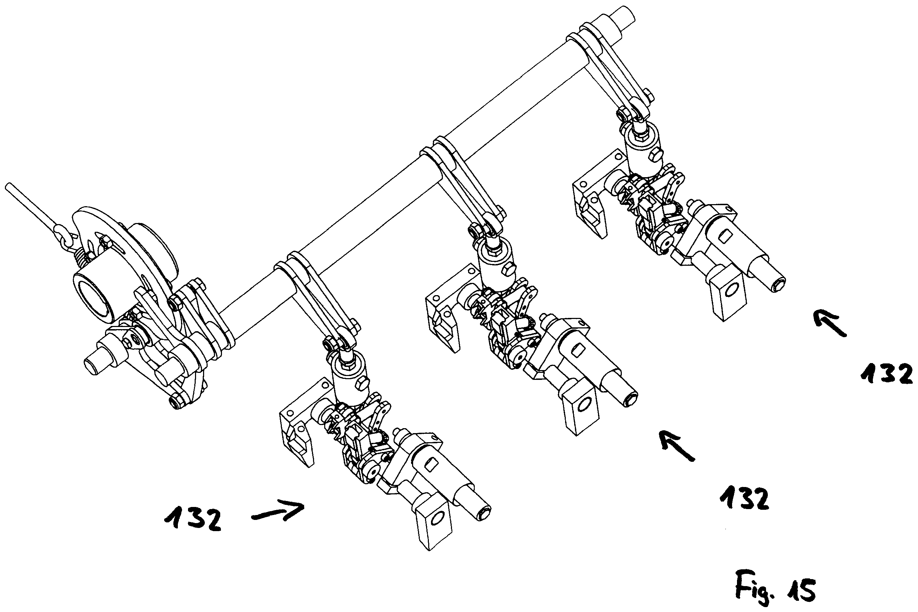

Fig. 15 zeigt drei Reibschweißeinrichtungen 132, die jeweils einer Bindeeinrichtung zugeordnet sind. Dargestellt jeweils der zugeordnete Druckluftmotor 134, ein das zu verschweißende Bindematerial während des Schweißvorgangs kontaktierendes Schweißelement 126 sowie die Schweißklemmeinrichtung 128. Diese Komponenten sind schwenkbar um eine Schweißeinrichtungsschwenkachse 130 am Bindetisch befestigt.

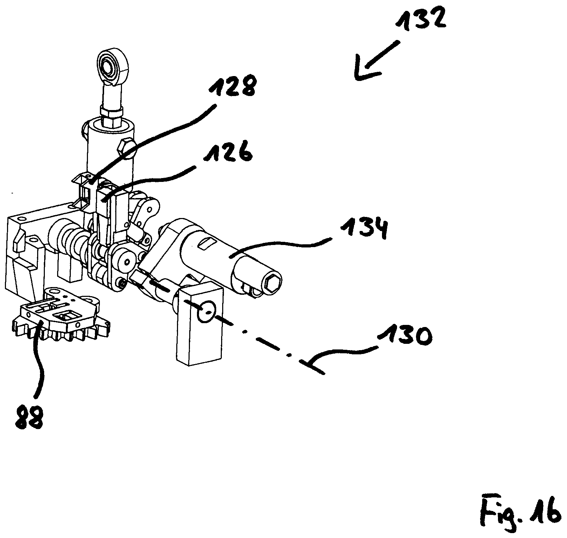

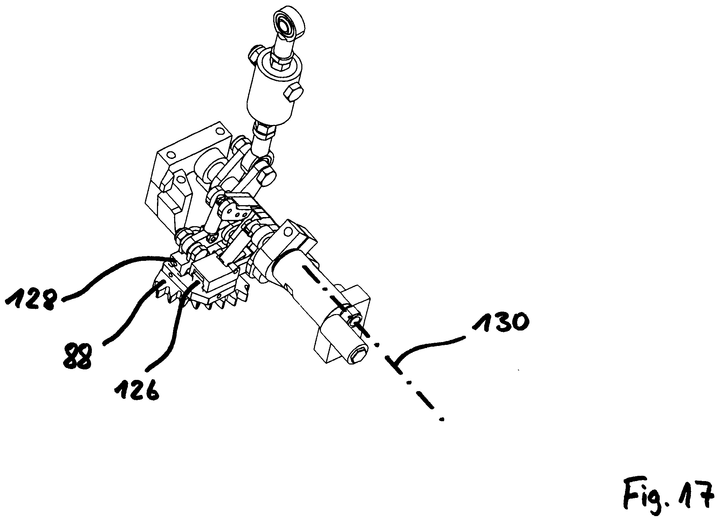

Die Fig. 16 und 17 zeigen jeweils die Reibschweißeinrichtung 132 gemeinsam mit dem Schwenkelement 88, welches zwischen bandförmigem Bindematerial 40 und Ballen geschwenkt ist. In einer geöffneten Stellung der Reibschweißeinrichtung 132 (vgl. Fig. 16) haben diese beiden Komponenten keine Wirkung aufeinander, unabhängig davon, ob der Druckluftmotor 134 aktiviert ist oder nicht. Vom Betrieb des Druckluftmotors 134 hängt ausschließlich die hochfrequente Bewegung des Schweißelements 126 ab.

Fig. 17 zeigt wiederum die Reibschweißeinrichtung 132 und das Schwenkelement 88, wobei in diesem Fall die Reibschweißeinrichtung 132 geschlossen ist. Das bandförmige Bindematerial 40, was sich in einem Bindezyklus bei dieser Position der Reibschweißeinrichtung 132 zwischen eben dieser Reibschweißeinrichtung 132 und dem Schwenkelement 88 befindet, ist nicht dargestellt.

Ausgelöst wird auch diese Schwenkbewegung der Reibschweißeinrichtung 132 von einem Hebel, der an einer Hebelwelle angeordnet ist, dessen Bewegung wiederum von einer Kurvenscheibe geführt wird (vgl. Fig. 15). Das Schweißelement 126 sowie die Schweißklemmeinrichtung 128 werden hierdurch mechanisch geführt. Um eine Überbeanspruchung dieser Bauteile beim Klemmen bzw. Schweißen zu vermeiden, sind Überlastsicherungen in Form von Federpaketen vorgesehen. Eine Überlastsicherung ist zwischen Hebelwelle und Reibschweißeinrichtung 132 angeordnet.

Dem Schweißelement 126 und der Schweißklemmeinrichtung 128 sind jeweils noch zusätzlich eigene Überlastsicherungen zugeordnete. Diese dienen neben der Überlastsicherung auch zur Feineinstellung des Anpressdrucks des Schweißelements 126 und der Klemmkraft der Schweißklemmeinrichtung 128, die somit unabhängig voneinander erfolgen kann.

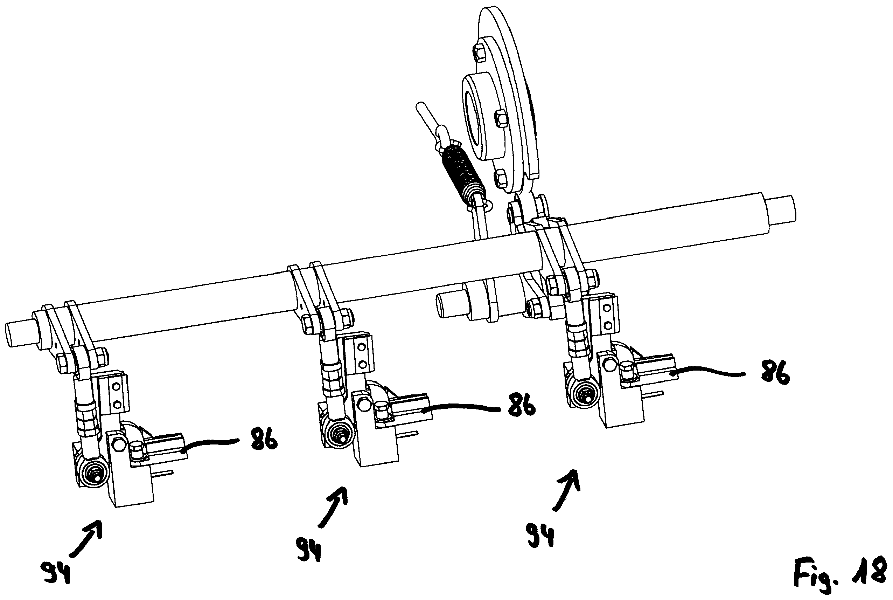

Die Fig. 18 bis 21 zeigen die vordere Klemmvorrichtung 94. Weiterhin dargestellt sind der Gegenhalter 86, der Niederhalter 118, ein Klemmarm 104 und ein Schneidarm 112. Gemäß der Beschreibung eines Bindezyklus (vgl. Fig. 13) klemmt die vordere Klemmvorrichtung 94 das bandförmige Bindematerial 40 in der Ausgangsposition der Bindeeinrichtung.

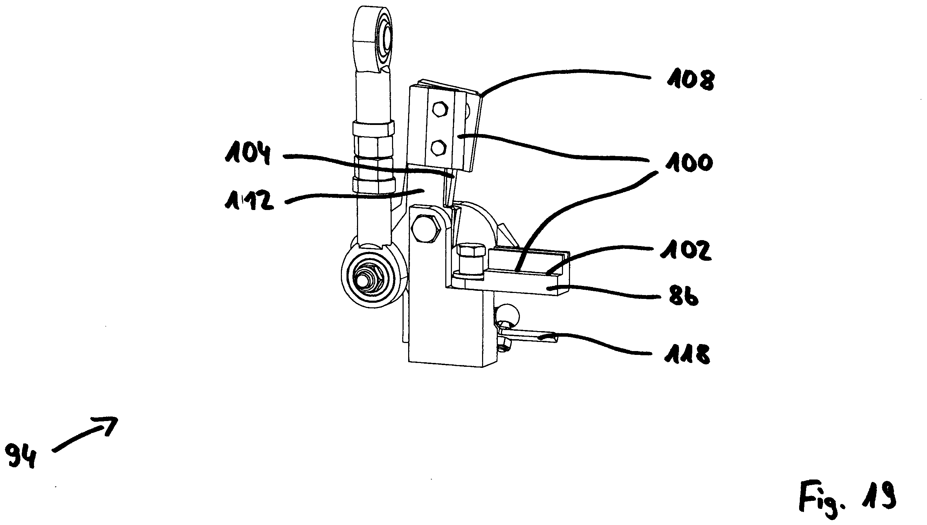

Der Gegenhalter 86 ist um eine Gegenhalterschwenkachse 96 schwenkbar gegenüber dem Bindetisch gelagert. Fig. 19 zeigt den Gegenhalter 86, welcher im oberen Bereich eine Gegenschneide 102 und einen zu einer Fixieranordnung 106 gehörenden Vorsprung 108 aufweist, in einer Gegenhalteposition. Die vordere Klemmvorrichtung 94 mit ihrem Klemmarm 104 und die Schneidvorrichtung 100 mit ihrem Schneidarm 112 sind geöffnet. Der Niederhalter 118, der um eine Niederhalterschwenkachse 120 in einem Anschlagpunkt 122 gegenüber dem Bindetisch schwenkbar in einem Anschlagpunkt gelagert ist, ist ausgeklappt.

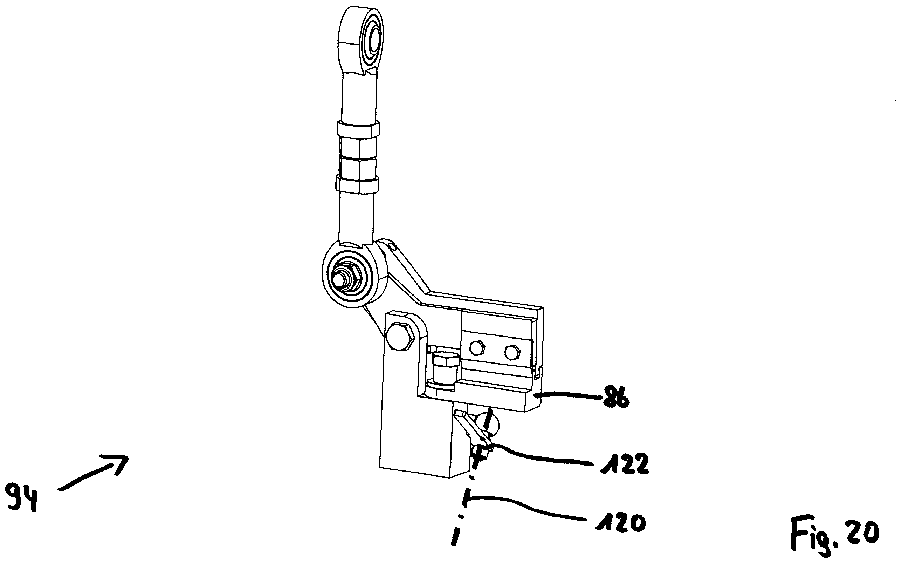

Fig. 20 zeigt den Gegenhalter 86 wiederum in der Gegenhalteposition und die vordere Klemmvorrichtung 94 in einer Klemmstellung. In dieser Klemmstellung klemmt sie das bandförmige Bindematerial 40 während sich die Bindeeinrichtung in der Ausgangsposition befindet. Dabei greift ein Vorsprung 108 des Klemmarms 104 in eine Aussparung und der beim Schließen der vorderen Klemmvorrichtung 94 nacheilende Schneidarm 112 schneidet das bandförmige Bindematerial 40 bei bestehender Klemmung durch Zusammenwirken der am Schneidarm 112 angeordneten Schneide mit einer Gegenschneide 102. Der Niederhalter 118 wird beim Schließen der vorderen Klemmvorrichtung 94 und der Schneidvorrichtung 100 eingeklappt.

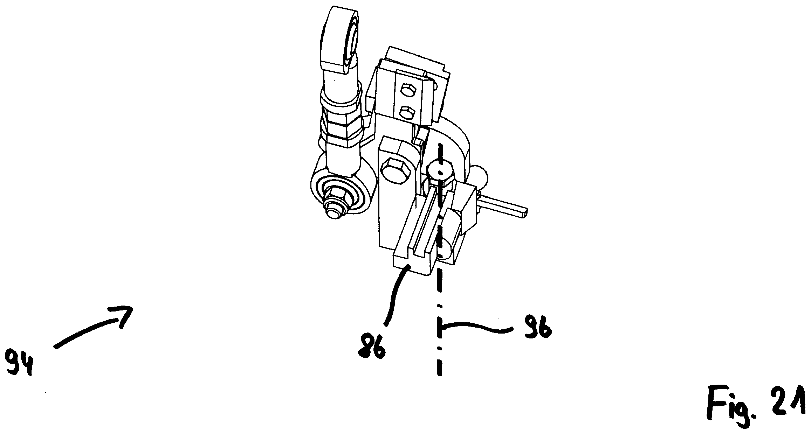

Fig. 21 zeigt den Gegenhalter 86 in einer Ausweichposition, in der er der durch die Bindenadel 14 zugeführten Schlaufe des bandförmigen Bindematerials 40 ausweicht. Ein nicht dargestelltes Federelement stellt den Gegenhalter 86 bei ausbleibender Krafteinwirkung durch das bandförmige Bindematerial 40 in die Gegenhalteposition zurück.

An der vorderen Klemmvorrichtung 94 ist ein Hebel angeordnet, welcher wiederum an einer Hebelwelle angeordnet ist, dessen Schwenkbewegung durch eine Kurvenscheibe geführt wird.

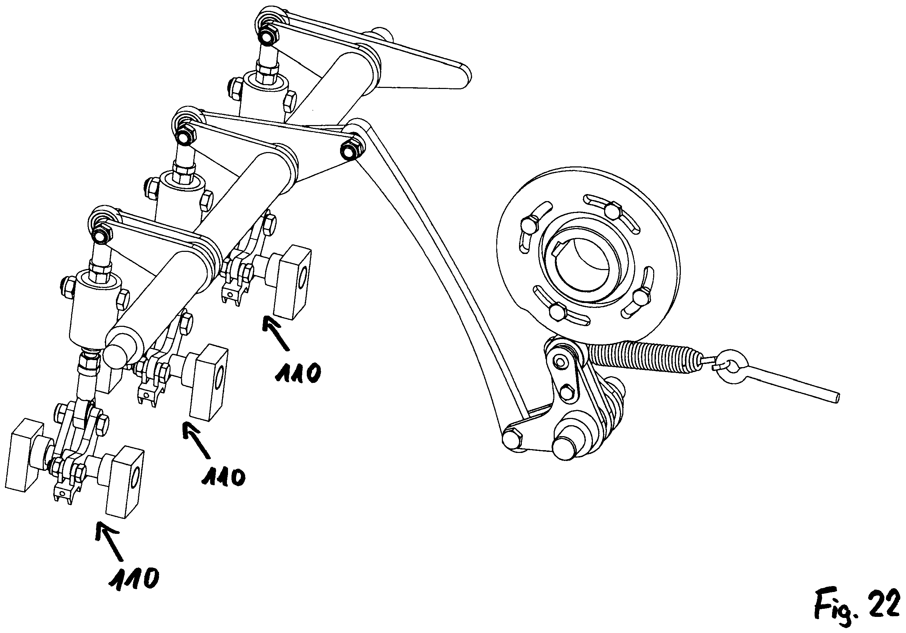

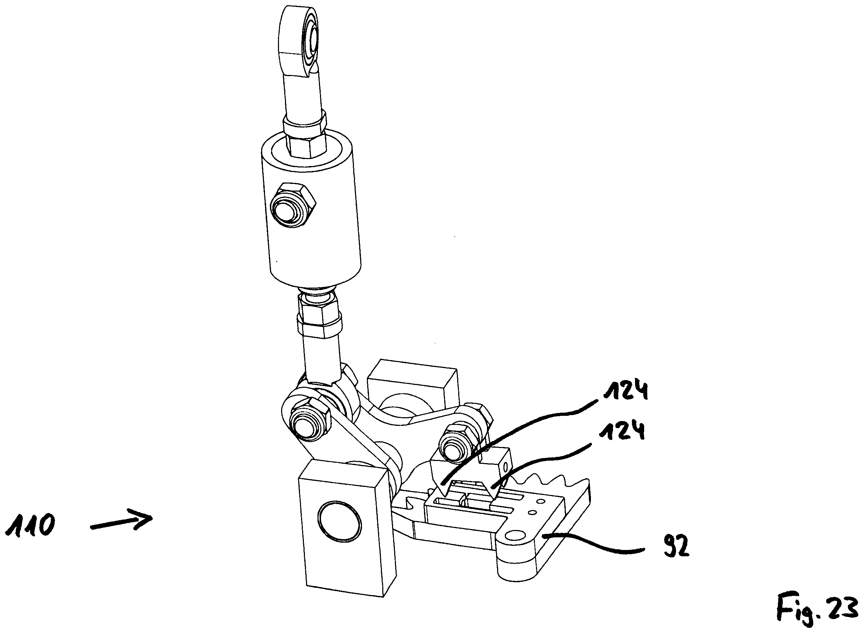

Fig. 22 und Fig. 23 zeigen die hintere Klemmvorrichtung 110. Diese befindet sich in Fahrtrichtung der Ballenpresse 2 hinter der Reibschweißeinrichtung 132 und klemmt das bandförmige Bindematerial 40 in einer Klemmposition auf dem Gegenschwenkelement 92 fest. Zur Sicherstellung einer optimalen Ausrichtung des bandförmigen Bindematerials 40 gegenüber dem Schweißelement 126 verfügt die hintere Klemmvorrichtung 110 über Fangzähne 124. Diese Fangzähne 124 umfassen in der Klemmposition das bandförmige Bindematerial 40 und zentrieren es. Dazu verfügt das in Fig. 23 dargestellte Gegenschwenkelement 92 über den Fangzähnen 124 gegenüberliegende Ausnehmungen.

Auch die hintere Klemmvorrichtung 110 wird über einen Hebel, eine Hebelwelle und eine Kurvenscheibe, die auf der Steuerwelle 38 angeordnet ist, gesteuert. Hier ist wiederum eine Überlastsicherung in Form eines Federpaketes zwischen Hebelwelle und hinterer Klemmvorrichtung 110 vorgesehen. Die Überlastsicherung ist auch zur Feineinstellung der Klemmkraft der hinteren Klemmvorrichtung 110 nutzbar.

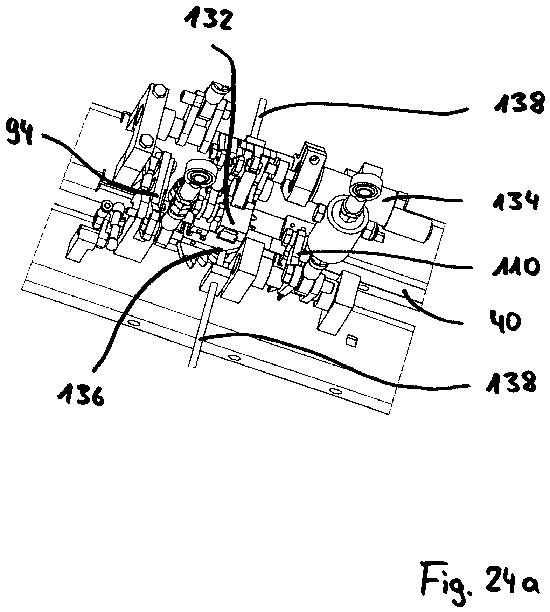

Fig. 24a zeigt die vordere Klemmvorrichtung 94, die hintere Klemmvorrichtung 110 sowie die Reibschweißeinrichtung 132 auf dem Bindetisch. Zusätzlich sind zwei Zuführelemente 138 dargestellt, die Teil der Luftkühlungseinrichtung sind. An ihrem dem bandförmigen Bindematerial 40 zugewandten Ende befindet sich jeweils eine Düse 136. Durch Zuführelement 138 und Düse 136 gelangt ein Luftstrom an die unter dem Schweißelement 126 liegenden Abschnitte des bandförmigen Bindematerials 40, wodurch das Erkalten der Schweißstelle beschleunigt wird.

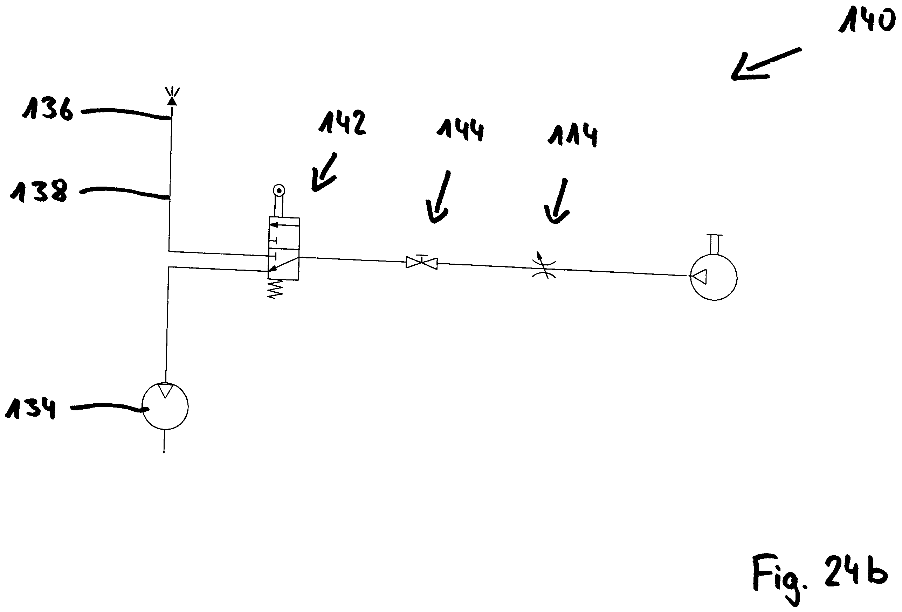

Fig. 24b zeigt einen Schaltplan der Kühleinrichtung. Die dadurch symbolisch dargestellte Regelvorrichtung 140 umfasst ein Druckluftventil 144 und ein Umschaltventil 142. Das Umschaltventil 142 kann einen Druckluftstrom zum Druckluftmotor 134 und nach Beenden des Schweißens über das Zuführelement 138 der Düse 136 zuführen.

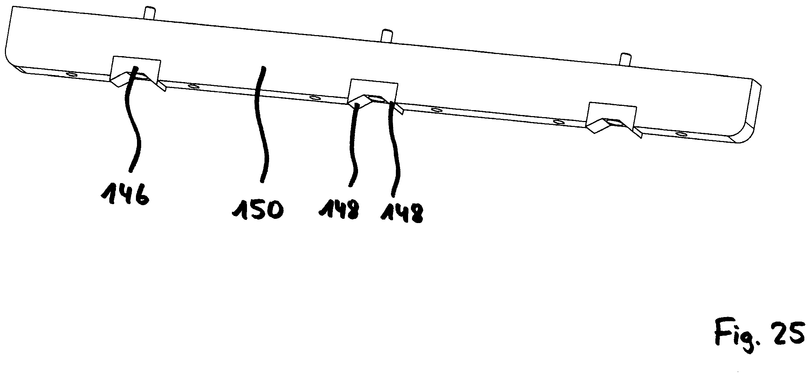

Fig. 25 zeigt drei Bandführungselemente 146, die jeweils einer Bindeeinrichtung zugeordnet sind. Die Bandführungselemente 146 sind einstellbar an einem Führungsträgerelement 150 angeordnet. Die Bandführungselemente 146 verfügen jeweils über zwei Führungsabsätze 148, die bei Anliegen des bandförmigen Bindematerials 40 für eine Zentrierung dieses sorgen. Durch die Bandführungselemente 146 wird die Ausrichtung der unteren der beiden zu verschweißenden Lagen des bandförmigen Bindematerials 40 sichergestellt. Fig. 8 zeigt, dass das Führungsträgerelement 150 dazu hinter der hinteren Klemmvorrichtung 110 auf dem Bindetisch angeordnet ist.

### Bezugsziffernliste:

- 2: Ballenpresse
- 4: Presskanal
- 8: Schwingenschwenkachse
- 10: Antriebsanordnung
- 12: Nadelschwinge
- 14: Bindenadel
- 16: Antriebsdrehachse
- 18: Antriebselement
- 20: Antriebshebel
- 22: Koppeleinrichtung
- 24: Koppelschwenkachse
- 26: erster Koppelhebel
- 28: weitere Koppelhebel
- 30: Antriebshebeldrehachse
- 32: Antriebskoppelschwenkachse
- 34: Presskolben
- 36: Führungsrolle
- 38: Steuerwelle
- 40: Bandförmiges Bindematerial
- 42: Stoffschlusserzeuger
- 44: Bremskontaktfläche
- 46: Abrolleinrichtung
- 48: Regeleinrichtung
- 50: Regelelement
- 52: Bremselement
- 54: Bremsrückstellelement
- 56: Bandrolle
- 58: Bandrollenträger
- 60: Längsmittelachse des Presskanals
- 62: Abrolldrehachse
- 64: Regelelementschwenkachse
- 66: Führungselement
- 68: Bremselementfläche
- 70: Übertragungsvorrichtung
- 72: Steuerhebel
- 74: Umlenkelement
- 76: Bandspeicher
- 78: Bandspeicherachskörper
- 80: Freiachskörper
- 82: Bandspeicherrückstellelement
- 86: Gegenhalter
- 88: Schwenkelement
- 90: Schwenkelementsteuerhebel
- 92: Gegenschwenkelement
- 94: Vordere Klemmvorrichtung
- 96: Gegenhalterschwenkachse
- 98: Teilzahnkreis
- 100: Schneidvorrichtung
- 102: Gegenschneide
- 104: Klemmarm
- 106: Fixieranordnung
- 108: Vorsprung
- 110: Hintere Klemmvorrichtung
- 112: Schneidarm
- 114: Drossel
- 118: Niederhalter
- 120: Niederhalterschwenkachse
- 122: Anschlagspunkt
- 124: Fangzähne
- 126: Schweißelement
- 128: Schweißklemmeinrichtung
- 130: Schweißeinrichtungsschwenkachse
- 132: Reibschweißeinrichtung
- 134: Druckluftmotor
- 136: Düse
- 138: Zuführelement
- 140: Regelvorrichtung
- 142: Umschaltventil
- 144: Druckluftventil
- 146: Bandführungselement
- 148: Führungsabsatz
- 150: Führungsträgerelement

## Patentansprüche

1. Ballenpresse (2) für landwirtschaftliches Erntegut, mit einem Presskanal (4) und mit mindestens einer Bindeeinrichtung für ein bandförmiges Bindematerial (40) aus vorzugsweise einem verschweißbaren oder verklebbaren Kunststoffmaterial zur Umhüllung des zu pressenden Ballens, wobei die Bindeeinrichtung einen das Bindematerial (40) stoffschlüssig verbindenden Stoffschlusserzeuger (42) aufweist, **dadurch gekennzeichnet, dass** die zumindest eine Bindeeinrichtung eine Abrolleinrichtung (46) und einen Bandspeicher (76) aufweist, der einen Teil des zwischen der Abrolleinrichtung (46) und dem Stoffschlusserzeuger (42) geführten Bindematerials (40) aufnimmt, wobei der Bandspeicher (76) mindestens zwei von dem Bindematerial (40) umschlungene Bandspeicherachskörper (78) aufweist, von denen mindestens einer als Freiachskörper (80) derart beweglich angeordnet ist, dass der Abstand der Bandspeicherachskörper (78) zueinander veränderbar ist, und wobei der Bandspeicher (76) mindestens ein Bandspeicherrückstellelement (82) aufweist, durch das der Freiachskörper (80) mit einer den Freiachskörper (80) in eine den Abstand der Bandspeicherachskörper (78) vergrößernde Richtung bewegenden Kraft beaufschlagbar ist, wobei die Abrolleinrichtung (46) gegenüber dem Presskanal (4) drehbar gelagert ist und einen aufgerollten Teil des Bindematerials (40) und mindestens eine Bremskontaktfläche (44) aufweist und eine Regeleinrichtung (48) umfasst, wobei die Regeleinrichtung (48) mindestens ein gegenüber dem Presskanal (4) bewegbar gelagertes und durch einen abgerollten Teil des Bindematerials (40) ansteuerbares Regelelement (50), mindestens ein durch eine Ansteuerung des Regelelementes (50) von der Bremskontaktfläche (48) lösbares Bremselement (52) sowie mindestens ein die Regeleinrichtung (48) in eine eine Rotation der Abrolleinrichtung (46) bremsende Bremsstellung zurückstellendes Bremsrückstellelement (54) aufweist, wobei in der Bremsstellung die Bremskontaktfläche (44) zumindest teilweise am Bremselement (52) anliegt und wobei das Regelelement (50) ein einen abgerollten Teil des Bindematerials (40) zumindest teilweise umschließendes Führungselement (66) umfasst.

2. Ballenpresse (2) nach Anspruch 1, **dadurch gekennzeichnet, dass** die Bandspeicherachskörper (78) parallel zueinander ausgerichtet sind.

3. Ballenpresse (2) nach Anspruch 1 oder 2, **dadurch gekennzeichnet, dass** die Bandspeicherachskörper (78) jeweils alternierend mehrfach nach Art eines Flaschenzuges von dem Bindematerial (40) umschlungen sind.

4. Ballenpresse (2) nach einem der vorhergehenden Ansprüche, **dadurch gekennzeichnet, dass** die Bandspeicherachskörper (78) in einer Ebene relativ zueinander beweglich sind.

5. Ballenpresse (2) nach einem der Ansprüche 1 bis 4, **dadurch gekennzeichnet, dass** der Bandspeicher (76) einer Bindeeinrichtung zugeordnet ist.

6. Ballenpresse (2) nach einem der Ansprüche 1 bis 4, **dadurch gekennzeichnet, dass** der Bandspeicher (76) mehreren Bindeeinrichtungen zugeordnet ist.

7. Ballenpresse (2) nach einem der vorhergehenden Ansprüche, **dadurch gekennzeichnet, dass** das Bandspeicherrückstellelement (82) als Zugfeder ausgestaltet ist.

8. Ballenpresse (2) nach einem der vorhergehenden Ansprüche, **dadurch gekennzeichnet, dass** die Abrolleinrichtung (46) Bindematerial (40) in Form einer Bandrolle (56) und einen drehbaren und die Bandrolle (56) tragenden Bandrollenträger (58) umfasst.

9. Ballenpresse (2) nach einem der vorhergehenden Ansprüche, **dadurch gekennzeichnet, dass** die Abrolleinrichtung (46) um eine zu einer Längsmittelachse (60) des Presskanals (4) orthogonale und zu einer Bodenebene der Presskanals (4) parallele Abrolldrehachse (62) drehbar ist.

10. Ballenpresse (2) nach einem der vorhergehenden Ansprüche, **dadurch gekennzeichnet, dass** das Regelelement (50) um eine Regelelementschwenkachse (64) schwenkbar angeordnet ist, die ortsfest gegenüber dem Presskanal (4) positioniert ist.

11. Ballenpresse (2) nach einem der vorhergehenden Ansprüche, **dadurch gekennzeichnet, dass** das Regelelement (50) durch eine erhöhten Bandspannung des Bindematerials (40) derart ansteuerbar ist, dass das Bremselement (52) dadurch von der Bremskontaktfläche (44) lösbar ist.

12. Ballenpresse (2) nach einem der vorhergehenden Ansprüche, **dadurch gekennzeichnet, dass** das Führungselement (66) als Öse ausgebildet ist.

13. Ballenpresse (2) nach einem der vorhergehenden Ansprüche, **dadurch gekennzeichnet, dass** die Bremskontaktfläche (44) durch die Mantelfläche eines Kreiszylinders gebildet ist und das Bremselement (52) eine zu einem Teil der Bremskontaktfläche (44) komplementäre zylindermantelabschnittsförmige Bremselementfläche (68) aufweist.

14. Ballenpresse (2) nach einem der vorhergehenden Ansprüche, **dadurch gekennzeichnet, dass** das Bremsrückstellelement (54) als Feder ausgebildet ist.

## Claims

1. Baler (2) for agricultural crops, comprising a pressing channel (4) and comprising at least one binding device for a tape-like binding material (40), preferably consisting of a weldable or gluable plastics material, for encasing the bale to be pressed, the binding device having an integral bond generator (42) which integrally bonds the binding material (40), **characterised in that** the at least one binding device has an unrolling device (46) and a tape storage means (76) which receives a part of the binding material (40) which is guided between the unrolling device (46) and the integral bond generator (42), the tape storage means (76) having at least two tape storage axial bodies (78) which the binding material (40) wraps around and at least one of which is movably arranged as a free axial body (80) such that the distance between the tape storage axial bodies (78) can be changed, and the tape storage means (76) having at least one tape storage restoring element (82), by means of which the free axial body (80) can be acted on by a force which moves the free axial body (80) in a direction which increases the distance between the tape storage axial bodies (78), the unrolling device (46) being rotatably mounted with respect to the pressing channel (4) and having a rolled-up part of the binding material (40) and at least one brake contact surface (44), and comprising a control device (48), the control device (48) having at least one control element (50) which is movably mounted with respect to the pressing channel (4) and can be actuated by an unrolled part of the binding material (40), at least one braking element (52) which can be separated from the brake contact surface (48) by actuating the control element (50) and at least one brake restoring element (54) which resets the control device (48) into a braking position which brakes a rotation of the unrolling device (46), the brake contact surface (44) at least partly abutting the braking element (52) in the braking position and the control element (50) comprising a guide element (66) which at least partly surrounds an unrolled part of the binding material (40).

2. Baler (2) according to claim 1, **characterised in that** the tape storage axial bodies (78) are oriented in parallel with one another.

3. Baler (2) according to either claim 1 or 2, **characterised in that** the binding material (40) alternately wraps around each of the tape storage axial bodies (78) several times in the manner of a pulley block.

4. Baler (2) according to any of the preceding claims, **characterised in that** the tape storage axial bodies (78) are movable relative to one another in one plane.

5. Baler (2) according to any of claims 1 to 4, **characterised in that** the tape storage means (76) is associated with a binding device.

6. Baler (2) according to any of claims 1 to 4, **characterised in that** the tape storage means (76) is associated with a plurality of binding devices.

7. Baler (2) according to any of the preceding claims, **characterised in that** the tape storage restoring element (82) is designed as a tension spring.

8. Baler (2) according to any of the preceding claims, **characterised in that** the unrolling device (46) comprises binding material (40) in the form of a tape reel (56) and a rotatable tape reel carrier (58) which carries the tape reel (56).

9. Baler (2) according to any of the preceding claims, **characterised in that** the unrolling device (46) is rotatable about an unrolling axis of rotation (62) which is orthogonal to a longitudinal central axis (60) of the pressing channel (4) and parallel with respect to a bottom plane of the pressing channel (4).

10. Baler (2) according to any of the preceding claims, **characterised in that** the control element (50) is pivotally arranged about a control element pivot axis (64) which is fixed in position relative to the pressing channel (4).

11. Baler (2) according to any of the preceding claims, **characterised in that** the control element (50) can be actuated by an increased tape tension of the binding material (40) such that the braking element (52) can thereby be separated from the brake contact surface (44).

12. Baler (2) according to any of the preceding claims, **characterised in that** the guide element (66) is designed as an eyelet.

13. Baler (2) according to any of the preceding claims, **characterised in that** the brake contact surface (44) is formed by the lateral surface of a circular cylinder and the braking element (52) has a braking element surface (68) which has the shape of a lateral cylinder surface portion and is complementary to a part of the brake contact surface (44).

14. Baler (2) according to any of the preceding claims, **characterised in that** the brake restoring element (54) is designed as a spring.

## Revendications

1. Presse à balles (2) pour des produits de récolte agricole, comprenant un canal de presse (4) et au moins un dispositif d'attache pour un matériau d'attache en forme de bande (40) de préférence en matière plastique soudable ou collable pour envelopper la balle à presser, dans laquelle le dispositif d'attache présente un moyen de génération de liaison de matière (42) qui relie le matériau d'attache (40) par liaison de matière, **caractérisée en ce que** l'au moins un dispositif d'attache présente un dispositif de déroulement (46) et un accumulateur de bande (76) qui reçoit une partie du matériau d'attache (40) guidé entre le dispositif de déroulement (46) et le moyen de génération de liaison de matière (42), dans laquelle l'accumulateur de bande (76) présente au moins deux corps d'essieu d'accumulateur de bande (78) qui enserrent le matériau d'attache (40) et dont au moins un est disposé mobile sous la forme d'un corps d'essieu libre (80) de telle sorte que la distance des corps d'essieu d'accumulateur de bande (78) peut être modifiée l'un par rapport à l'autre, et dans laquelle l'accumulateur de bande (76) présente au moins un élément de rappel d'accumulateur de bande (82) qui permet de solliciter le corps d'essieu libre (80) avec une force qui déplace le corps d'essieu libre (80) dans une direction augmentant la distance des corps d'essieu d'accumulateur de bande (78), dans laquelle le dispositif de déroulement (46) est monté rotatif par rapport au canal de presse (4) et présente une partie enroulée du matériau d'attache (40) et au moins une surface de contact de frein (44) et comprend un moyen de réglage (48), dans laquelle le moyen de réglage (48) présente au moins un élément de réglage (50) monté mobile par rapport au canal de presse (4) et qui peut être actionné par une partie déroulée du matériau d'attache (40), au moins un élément de frein (52) désaccouplable de la surface de contact de frein (48) par un actionnement de l'élément de réglage (50) ainsi qu'au moins un élément de rappel de frein (54) repoussant le moyen de réglage (48) dans une position de freinage freinant une rotation du dispositif de déroulement (46), dans laquelle dans la position de freinage la surface de contact de frein (44) se trouve au moins partiellement sur l'élément de frein (52) et dans laquelle l'élément de réglage (50) comprend un élément de guidage (66) entourant au moins partiellement une partie déroulée du matériau d'attache (40).

2. Presse à balles (2) selon la revendication 1, **caractérisée en ce que** les corps d'essieu d'accumulateur de bande (78) sont orientés parallèlement l'un à l'autre.

3. Presse à balles (2) selon la revendication 1 ou 2, **caractérisée en ce que** les corps d'essieu d'accumulateur de bande (78) sont chacun enserrés de manière alternée plusieurs fois par le matériau d'attache (40) à la manière d'un palan.

4. Presse à balles (2) selon une des revendications précédentes, **caractérisée en ce que** les corps d'essieu d'accumulateur de bande (78) sont mobiles l'un par rapport à l'autre dans un plan.

5. Presse à balles (2) selon une des revendications 1 à 4, **caractérisée en ce que** l'accumulateur de bande (76) est associé à un dispositif d'attache.

6. Presse à balles (2) selon une des revendications 1 à 4, **caractérisée en ce que** l'accumulateur de bande (76) est associé à plusieurs dispositifs d'attache.

7. Presse à balles (2) selon une des revendications précédentes, **caractérisée en ce que** l'élément de rappel d'accumulateur de bande (82) est réalisé sous la forme d'un ressort de traction.

8. Presse à balles (2) selon une des revendications précédentes, **caractérisée en ce que** le dispositif de déroulement (46) comprend un matériau d'attache (40) sous la forme d'un rouleau à bande (56) et un support de rouleau à ruban (58) rotatif et portant le rouleau à bande (56).

9. Presse à balles (2) selon une des revendications précédentes, **caractérisée en ce que** le dispositif de déroulement (46) est rotatif autour d'un axe de rotation de déroulement (62) perpendiculaire à un axe central longitudinal (60) du canal de presse (4) et parallèle à un plan de fond du canal de presse (4).

10. Presse à balles (2) selon une des revendications précédentes, **caractérisée en ce que** l'élément de réglage (50) est disposé pivotant autour d'un axe de pivotement d'élément de réglage (64) qui est positionné de manière fixe par rapport au canal de presse (4).

11. Presse à balles (2) selon une des revendications précédentes, **caractérisée en ce que** l'élément de réglage (50) peut être actionné par une augmentation de la tension de bande du matériau d'attache (40) de telle sorte que l'élément de frein (52) se trouve désaccouplé de la surface de contact de frein (44) .

12. Presse à balles (2) selon une des revendications précédentes, **caractérisée en ce que** l'élément de guidage (66) est réalisé sous la forme d'un œillet.

13. Presse à balles (2) selon une des revendications précédentes, **caractérisée en ce que** la surface de contact de frein (44) est formée par le revêtement d'un vérin cylindrique et l'élément de frein (52) présente une surface d'élément de frein (68) sous la forme d'une section de revêtement de vérin qui est complémentaire à une partie de la surface de contact de frein (44) .

14. Presse à balles (2) selon une des revendications précédentes, **caractérisée en ce que** l'élément de rappel de frein (54) est réalisé sous la forme d'un ressort.
